(19) 

**Europäisches Patentamt**

**European Patent Office**

**Office européen des brevets**

(11) **EP 4 575 759 A1**

(12) **EUROPEAN PATENT APPLICATION**

(43) Date of publication:
25.06.2025  Bulletin 2025/26

(21) Application number: 23315461.6

(22) Date of filing: 19.12.2023

(51) International Patent Classification (IPC):
*G06F 7/58* (2006.01)       *H04L 9/00* (2022.01)

(52) Cooperative Patent Classification (CPC):
**G06F 7/582; H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Zama SAS**
**75002 Paris (FR)**

(72) Inventors:
• **Deo, Rikki Amit Inder**
  **75002 Paris (FR)**
• **Joye, Marc Francois**
  **75002 Paris (FR)**
• **Libert, Benoît Pascal**
  **75002 Paris (FR)**

(74) Representative: **DeltaPatents B.V.**
**Fellenoord 370**
**5611 ZL Eindhoven (NL)**

(54) **HOMOMORPHIC EVALUATION OF PSEUDORANDOM FUNCTION**

(57)    Some embodiments are directed to a server device configured for homomorphically evaluating a pseudorandom function, and a client device for evaluating the same pseudorandom function in standard computation. For example, in an application data is encrypted by the client device by adding a stream of pseudorandom values to it. The server device can transcipher such data to FHE encrypted data.

*Fig. 2a*

EP 4 575 759 A1

**Description**

**TECHNICAL FIELD**

The presently disclosed subject matter relates to a method for a server device for homomorphically evaluating a pseudorandom function, a method for a client device for evaluating a pseudorandom function, a server device, a client device, and a computer storage medium.

**BACKGROUND**

A pseudorandom function (PRF) is a deterministic function indexed by a secret key $k$. On a uniform and hidden choice of $k$, the PRF is indistinguishable from a function that has random outputs. PRFs are a fundamental cryptographic object with numerous applications, e.g., symmetric encryption schemes [5], message authentication [6] and more generally in standard protocols such as TLS [27, 26].

Fully homomorphic encryption (FHE) allows the homomorphic evaluation of any circuit. For example, starting with an FHE encryption of the PRF secret key and a public input, one can produce an encryption of the PRF evaluation without the FHE decryption key. Various FHE schemes exist, each with their own distinct properties. One example of an FHE scheme is TFHE/FHEW [13., 16] which has relatively large key sizes, but reasonably fast computation time. All known FHE schemes have noisy ciphertexts. If the noise grows too large as a result of homomorphic computation, one can shrink the noise back down using a process known as bootstrapping. An advantage of TFHE/FHEW is that one may apply a univariate function to the plaintext while bootstrapping to shrink the noise. This is known as programmable bootstrapping (PBS). This allows efficient evaluation of circuits that can be compressed using univariate functions.

We consider the problem of homomorphically evaluating PRFs. That is, given an FHE encryption of a PRF key $k$, we wish to produce an encryption of a LWR-based PRF evaluation on public input $x$ using key $k$. Applying FHE naively requires that the PRF be decomposed as a Boolean circuit. This will typically result in many programmable bootstrapping operations (PBS); for example, at least one PBS for each NAND gate in the circuit. Therefore, the circuit may become very complicated. Even if such a circuit is optimized for the number of PBS operations, the circuit remains very costly to evaluate.

The number of bootstraps/key-switches required for evaluation is related to the number of non-linear operations over $\mathcal{P}$. Since bootstrapping is by far the most computationally expensive aspect of FHE, one would like to limit the number of bootstraps per PRF evaluation. In order to do so, it is desirable to have a PRF evaluation circuit with a small number of gates. Additionally, limiting the depth of the circuit restricts the number of sequential bootstrapping operations which indicates efficiency given parallel processing.

**SUMMARY**

There is a need to improve the homomorphic evaluation of pseudorandom functions.

Embodiments present pseudorandom functions, FHE schemes, and/or parametrization. In particular, embodiments are provided that may be implemented with a small number of sequential bootstraps.

Aspects of the invention include a method for a server device for homomorphically evaluating a pseudorandom function, a method for a client device for evaluating a pseudorandom function, a server device, a client device, and a computer storage medium.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a homomorphic computing system,
Figure 1b schematically shows an example of an embodiment of a homomorphic computing system,
Figure 1c schematically shows an example of an embodiment of a homomorphic computing system,
Figure 2a schematically shows an example of an embodiment of a homomorphic computing system,
Figure 2b schematically shows an example of an embodiment of a pseudorandom function,
Figure 2c schematically shows an example of an embodiment of a pseudorandom function,
Figure 3a schematically shows an example of an embodiment of a method for a server device for homomorphically evaluating a pseudorandom function,
Figure 3b schematically shows an example of an embodiment of a method for a client device for evaluating a pseudorandom function,
Figure 4a schematically shows a computer readable medium having a writable part comprising a computer program according to an embodiment,
Figure 4b schematically shows a representation of a processor system according to an embodiment.

**Reference signs list**

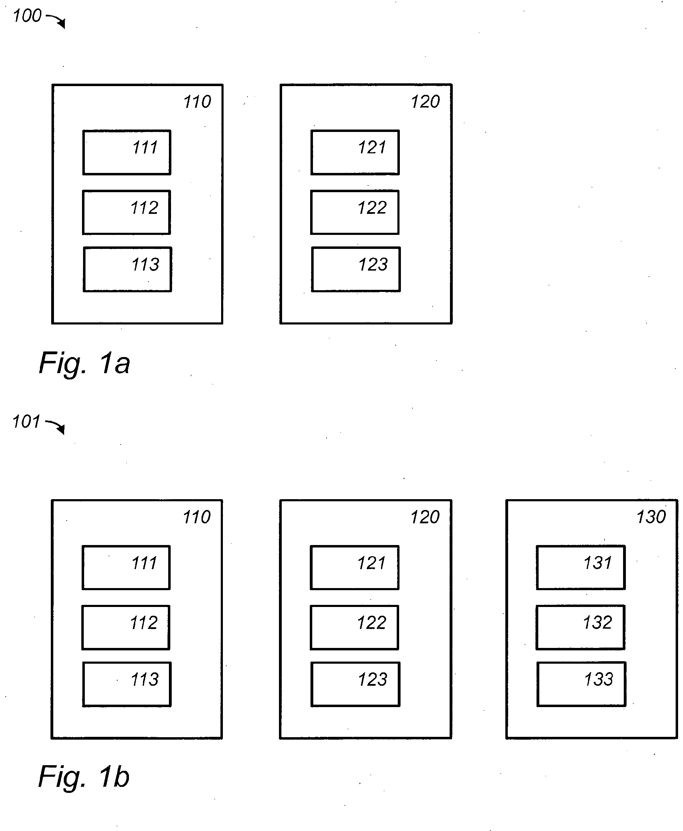

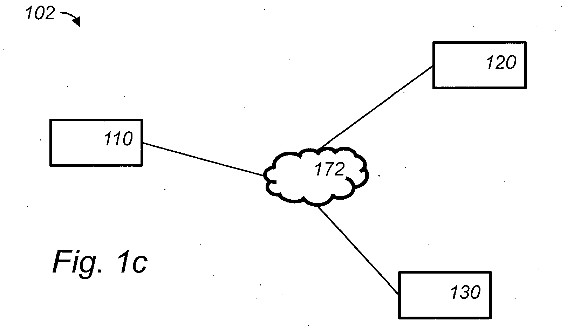

The following list of references and abbreviations corresponds to figures 1-2c, 4a-4b, and is provided for facilitating the interpretation of the drawings and shall not be construed as limiting the claims.

| | |
|---|---|
| 100-102 | a homomorphic computing system |
| 110 | a client device |
| 120 | a server device |
| 130 | a data storage device |
| 111 | a processor system |
| 112 | storage |
| 113 | a communication interface |
| 121 | a processor system |
| 122 | a storage |
| 123 | a communication interface |
| 131 | a processor system |
| 132 | a storage |
| 133 | a communication interface |
| 172 | a computer network |
| 210 | a client device |
| 220 | original data generator |
| 221, 222 | original data |
| 230 | an argument generator |
| 231, 232 | an argument |
| 240 | a pseudorandom function |
| 241, 242 | a pseudorandom value not FHE encrypted |
| 245 | a collision-resistant function |
| 246 | a randomizing function |
| 250 | combining operator |
| 251, 252 | stream-cipher encrypted data |
| 260 | FHE auxiliary key unit |
| 261 | secret key |
| 262 | a bootstrapping key |
| 310 | a server device |
| 321, 322 | FHE encrypted data |
| 331 | a randomized ciphertext |
| 340 | a pseudorandom function |
| 341, 342 | a pseudorandom value FHE encrypted |
| 345 | a bootstrapping algorithm |
| 350 | combining operator |
| 1000, 1001 | a computer readable medium |
| 1010 | a writable part |

| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

**DESCRIPTION OF EMBODIMENTS**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a homomorphic computing system 100. **Figure 1b** schematically shows an example of an embodiment of a homomorphic computing system 101.

System 100 comprises a client device 110 and a server device 120. System 101 further comprises an optional data storage device 130

Client device 110 is configured to compute a pseudorandom value, typically a stream of pseudorandom values. Client device 110 does this by applying a pseudorandom function (PRF) to one or more arguments. Client device 110 executes the pseudorandom function using plaintext computation, also referred to as standard computation, without using a fully homomorphic computation scheme. Client device 110's computation of the pseudorandom function is performed on non-encrypted data producing a non-encrypted output-in this case a non-encrypted pseudorandom value.

The arguments may be selected by client device 110 in a number of ways, e.g., randomly, pseudorandomly, as the output of a further function, e.g., a sequence of numbers, e.g., obtained by incrementing a seed, also known as an Initialization Vector (IV), a stream-cipher, and so on.

Server device 120 is configured to compute the same pseudorandom value, likewise typically a stream of pseudorandom values. Server device 120 applies a pseudorandom function to the same one or more arguments as client 110. However, server device 120 executes the pseudorandom function using homomorphic computation. Although the input to the pseudorandom function, the arguments, may be received and used by server device 120 in the plain, server device 120's computation of the pseudorandom function produces an encrypted output-in this case a pseudorandom value encrypted according the homomorphic encryption scheme used by client device 110 and server device 120. In particular, the server device 120's implementation of the pseudorandom function may be configured for a secret key s according to the homomorphic encryption scheme. The secret key s is known to client device 110, but unknown to server device 120. The encrypted pseudorandom value computed by server device 120 may be FHE encrypted for key s or for a further key s'.

The arguments may be obtained by server device 120 in a number of ways, e.g., received from client device 110, generated as the output of a further function known to both device 110 and 120. Server device 120 may receive the arguments or a seed to generate them, in the plain or encrypted according to conventional non-homomorphic encryption. In an embodiment, the pseudorandom function is keyed, e.g., keyed with the secret key s. In an embodiment, the pseudorandom function is keyed, and server device 120 receives an argument or a seed to generate it in the plain from client device 110. Secret key s is unknown to the server device, though it may have access to keys derived therefrom such as bootstrapping and key-switching keys.

One advantageous application of having a PRF that can be computed in the clear by a client device and homomorphically by a server device, is to transfer encrypted data from the client device to the server device. For example, a client device may have data in plain form, which it wishes to send to the server device while encrypted. To do this the plain data is encrypted using the PRF as a stream-cipher. Such encrypted data can be transciphered by the server device. The concept of transciphering involves converting a data that is encrypted in one scheme, e.g., according to a stream-cipher, into another encryption scheme, e.g., according to an FHE, in this case without decrypting the data, that is, without gaining information about the unencrypted content of the data.

Since an FHE encryption of data is larger than a stream-cipher encryption of the same data, typically significantly so, it is advantageous that the client device can send data encrypted according to the latter. At the same time, because a server device can transcipher the data to FHE form, the server device can perform homomorphic computation on the data.

Accordingly, storage of such encrypted data is smaller, and network transfers faster.

Optional, data storage device 130 is configured to receive from client device 110 data in encrypted form, e.g., stream-cipher encrypted form, store the encrypted data at device 130, and to later forward the encrypted data to server device 120. Communication with data storage device 130 uses stream-cipher encrypted data, so that network transfer to and from device 130 is reduced compared to FHE encrypted data. Moreover, the data storage needed at device 130 is reduced.

For example, the system 100 and/or system 101 may be used to transfer data from a client device 110 to a server device, optionally through an intermediate data storage device.

For example, the stream-cipher encrypted data could represent various types of data. The original plain data may be stream-cipher encrypted by client device 110 and sent to server device 120. Server device 120 may transcipher the data to an FHE encryption format and perform a computation while in FHE form. The resulting computation result is still in FHE format and sent to server device 120.

Below is a list of examples for using a homomorphic computation system.

In these examples a client device 120 is used to encrypt data before sending it to a homomorphic calculator, e.g., such as homomorphic computing system 110. Encryption may be used, e.g., in one of the following scenarios: Healthcare applications: patient data may be encrypted by a client device. Homomorphic calculation can be used to perform medical research on the encrypted data without compromising patient privacy. This could include analyzing genomic data or conducting clinical trials. For example, a homomorphic calculation may be performed on medical data, e.g., medical sensor data, e.g., a medical image. The medical data may comprise genomic data. The medical data is smaller during transport from the client device to the server device due to the stream-cipher type encryption.

Cloud computing: The encryption may be used to securely outsource computation to untrusted cloud providers. Computations may be performed on encrypted data stored in the cloud, without ever having to decrypt the data. For example, a client device may stream-cipher encrypt data and store it in the cloud. A server device may access the data and transcipher it to FHE encrypted data.

Machine learning: The encryption may be used to perform machine learning computations on encrypted data. This could include training models on encrypted data or making predictions on encrypted data without ever decrypting it. For example, a neural network may be trained and/or evaluated on encrypted data. For example, a client device may stream-cipher encrypt training data and send it to a server device. The server device may access the data and transcipher it to FHE encrypted data.

Blockchains: The encryption may be used to hide data appearing on a public blockchain. This could include private data like a user's account balance. Using encryption would enable wiring money by checking on encrypted data that the user's balance is sufficient for the transfer. Doing so would hide the exact balance of the user. For example, a client device may stream-cipher encrypt data and place it on the blockchain. A server device can access the blockchain to receive the encrypted data and transcipher it to FHE encrypted data for further processing.

Internet of Things (IoT) applications: The encryption may be used to securely process sensor data in real-time, without exposing the data to third parties. For example, a smart city could stream-cipher encrypt sensor data before sending the sensor data to a server device. The server device can transcipher the data to FHE format and perform a calculation homomorphically thereon. For example, such a system may be used to improve traffic flow or reduce energy consumption.

Encryption of data, e.g., by combining a plaintext data with a stream of pseudorandom values, e.g., by adding or subtracting the pseudorandom values to/from the plaintext data, is an important application. Nevertheless, pseudorandom functions (PRFs) are used extensively in various cryptographic applications. Below are further examples of where PRFs are used in cryptography.

For example, in an embodiment, a key derivation comprises a pseudorandom function, e.g., to derive one or more dependent keys from a master key, or to expand a short secret key into a longer key, e.g., for use in encryption algorithms, e.g., to derive a key from a password.

For example, a Hash-Based Message Authentication Code (HMAC) may comprise a pseudorandom function.

For example, a pseudorandom function may be used for random number generation, especially within a cryptographic context, but also outside thereof. For example, the PRF may be used to derive random components needed for signature algorithms, or random numbers for simulation models.

Client device 110 may comprise a processor system 111, a storage 112, and a communication interface 113. Server device 120 may comprise a processor system 121, a storage 122, and a communication interface 123. Data storage device 130 may comprise a processor system 131, a storage 132, and a communication interface 133.

In the various embodiments of communication interfaces 113, 123 and/or 133, the communication interfaces may be selected from various alternatives. For example, the interface may be a network interface to a local or wide area network, e.g., the Internet, a storage interface to an internal or external data storage, an application interface (API), etc.

Storage 112, 122 and 132 may be, e.g., electronic storage, magnetic storage, etc. The storage may comprise local storage, e.g., a local hard drive or electronic memory. Storage 112, 122 and 132 may comprise non-local storage, e.g., cloud storage. In the latter case, storage 112, 122 and 132 may comprise a storage interface to the non-local storage. Storage may comprise multiple discrete sub-storages together making up storage 112, 122, 132.

Storage 112, 122 and 132 may be non-transitory storage. For example, storage 112, 122 and 132 may store data in the presence of power such as a volatile memory device, e.g., a Random Access Memory (RAM). For example, storage 112, 122 and 132 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The devices 110, 120 and 130 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110, 120 and 130 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., FHE key data, e.g., bootstrapping key, optionally key-switching key, e.g., arguments and/or seeds for generating arguments, optionally stream-cipher encrypted data, FHE encrypted computation results. The communication interface 123 may correspondingly be used to send or receive digital data. The communication interface 133 may be used to send or receive stream-cipher encrypted digital data, and/or FHE encrypted data.

Client device 110, server device 120, and data storage device 130 may have a user interface, which may include well-known elements such as one or more buttons, a keyboard, display, touch screen, etc. The user interface may be arranged for accommodating user interaction for performing a homomorphic computation on server device 120.

The execution of devices 110, 120 and 130 may be implemented in a processor system. The devices 110, 120 and 130 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120 and 130 may comprise multiple processors. A processor circuit may be implemented in a distributed fashion, e.g., as multiple sub-processor circuits. For example, devices 110, 120 and 130 may use cloud computing.

Typically, the client device 110, server device 120, and data storage device 130 each comprise a microprocessor which executes appropriate software stored at the device; for example, that software may have been downloaded and/or stored in a corresponding memory, e.g., a volatile memory such as RAM or a non-volatile memory such as Flash.

Instead of using software to implement a function, the devices 110, 120 and/or 130 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, client device 110, server device 120 and data storage device 130 may comprise circuits, e.g., for cryptographic processing, and/or arithmetic processing.

In hybrid embodiments, functional units are implemented partially in hardware, e.g., as coprocessors, e.g., cryptographic, or arithmetic coprocessors, and partially in software stored and executed on the device.

**Figure 1c** schematically shows an example of an embodiment of a homomorphic computation system 102. System 102 may comprise multiple client devices; shown is client device 110. System 102 may comprise multiple server devices; shown is server device 120. System 102 may comprise multiple data storage devices shown is data storage device 130. The devices are connected through a computer network 172, e.g., the Internet. The client device 110, server device 120, and optional data storage device 130 may be according to an embodiment.

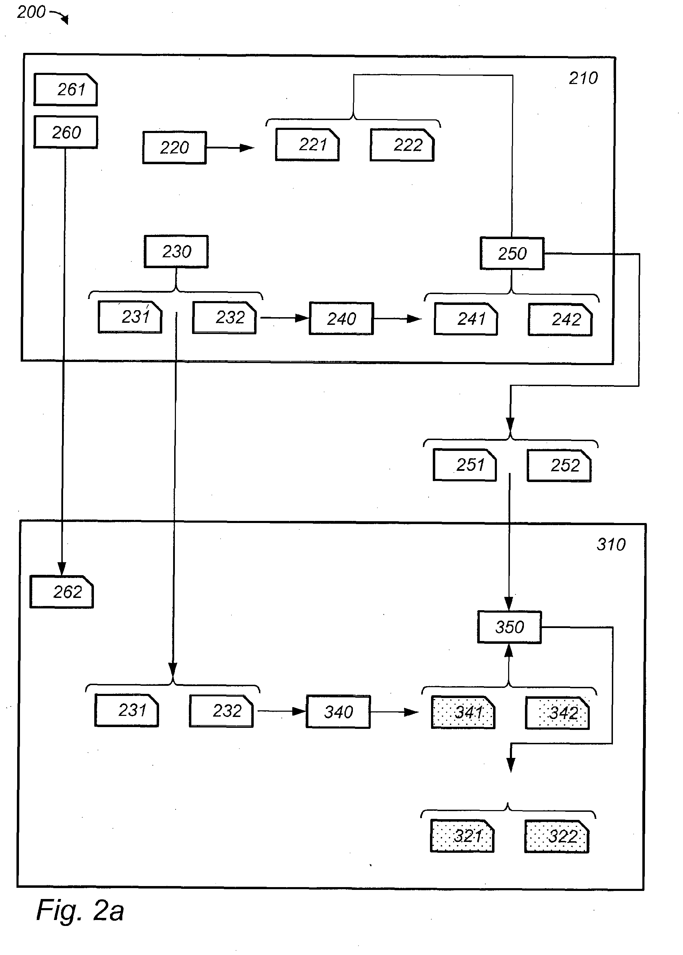

**Figure 2a** schematically shows an example of an embodiment of a homomorphic computing system 200.

System 200 comprises a client device 210 and a server device 310. Client device 210 and server device 310 are both configured to evaluate a pseudorandom function; Client device 210 using plaintext computation and server device 310 using homomorphic computation according to an FHE scheme. In figures 2a-2c, values that are encrypted according to an FHE scheme have a patterned background.

Client device 210 and server device 310 are configured to participate in an FHE scheme, e.g., server device 310 is configured for computing on encrypted data while it is encrypted; client device 210 is configured to encrypt and/or decrypt data to FHE format from plain format and vice versa. Depending on the exact FHE scheme used, the device may exchange key material at some point before server device 310 evaluates the PRF. The key material derived from the main FHE secret key s is referred to as the auxiliary key material. For example, the auxiliary key material to generate the auxiliary key material from key 261 according to the FHE scheme. For example, the auxiliary key material may include bootstrap key(s), and/or key-switching key(s).

Accordingly, client device 210 comprises an FHE auxiliary key unit 260. Unit 260 is optional as the auxiliary keys may be computed elsewhere.

For example, client device 210 may obtain a secret key 261, s, for the FHE scheme. Using the secret key, FHE data may be decrypted or plain data encrypted. Secret key 261 is known to device 210, but secret from device 310. For example, client device 210 may generate the key randomly, or may retrieve the key from a storage.

For example, in an embodiment, secret keys are vectors of ring elements $(s_1, ..., s_k) \in R^k$. For example, the ring may be a polynomial ring $R$, typically $R = \mathbb{Z}[X]/(\Phi(X))$, e.g., a cyclotomic ring where $\Phi(X)$ has degree $N$. For example, ring $R$ may be $\mathbb{Z}$ modulo a modulus.

For example, the message space may be $R_p$ for a modulus $p < q$, where $R_p$ denotes the ring R with its coefficients/entries reduced modulo $p$. A ciphertext may have the form:

$$(a_1, ..., a_k, b = \sum_{i=1}^{k} a_i \cdot s_i + e + (q/p) \cdot m \bmod q) \qquad (7)$$

where

$$a_k \hookleftarrow U(R_q), e \hookleftarrow \chi_e$$

is a noise sampled from some distribution $\chi_e$ over $R$, and $m \in R_p$ is the plaintext. Typically, p is a divisor of q. In an embodiment, q = p$^k$, wherein both p and q are a power of a prime, e.g., 2 or 3.

FHE auxiliary key unit may compute a bootstrapping key by selecting a further key $s'$ and encrypting the secret key $s \in R^k$ under the further key. The further key may be randomly selected. The auxiliary key material, e.g., bootstrapping key and optionally key-switching key is sent to server device 310.

The PRF which is evaluated at devices 210 and 310 takes as input an argument, e.g., x, and computes an output, e.g., PRF(x). In some embodiments, the PRF is keyed by the secret FHE key s.

A pseudorandom function is a deterministic function algorithm that, for a given input, produces a seemingly random output. The PRF always produces the same output for the same input and key, yet its output appears random and indistinguishable from a truly random sequence to an observer without knowledge of the key. For FHE encrypted PRF output it is acceptable that noise and random values inherent in the FHE encrypted value are different, this may happen if the same PRF function is implemented in two different FHE implementations, e.g., using slightly different bootstrapping operations. Preferably, the output values of the PRF are uniformly distributed over its output range.

For example, the client device 210 selects the argument for the pseudorandom function and sends the argument to the server device 310, wherein the argument is not encrypted according to the FHE scheme. Shown in figure 2a are two arguments: argument 231 and argument 232. There may be more than 2 arguments, e.g., to encrypt a stream of data. For example, the number of arguments may be at least 2, at least 1000, at least 10000, etc. The argument is sometimes referred as *x*.

There are various ways in which client device 210 may select the argument. For example, the argument or arguments may be randomly or pseudorandomly selected. For example, the arguments may be output of a further function, e.g., incrementation, a stream-cipher generator, a pseudorandom generator, etc. For example, an argument may be sent to a server device by sending a seed for a generator that generates the argument.

To produce a stream of pseudorandom values from our construction, the client device may generate the arguments according to predictable pattern. For example, the arguments may be x = 1, 2, 3,... It is advisable not to repeat the same stream for the same secret key 261. Accordingly, the stream may start from a Nonce, e.g., N, and comprise N, N + 1, N + 2, N + 3,... Any other non-repeating stream of arguments may also be used. The sequence of arguments does not need to be random because the PRF maps any value, or any sequence of distinct values, to pseudorandom outputs.

The stream may be generated from a seed. For example, as above, the stream may comprise x, g(x), g(g(x)),.... In the example above, the function *g* is incrementation by 1. Other options may be used. Preferably, a function is used that avoids that the arguments predictably repeat, e.g., an increasing function.

A further option is to use a stream-cipher to generate the stream of arguments. In an embodiment, the security of the system is derived from generally accepted hardness principles, but as a further precaution the stream of arguments may itself be generated in a pseudorandom fashion. Stream-ciphers which may be used to generate a pseudorandom stream of arguments include: Salsa20/ChaCha, AES in Counter Mode (AES-CTR), Rabbit, etc.

When generating arguments using a stream-cipher there is a chance of repeating arguments, though the probability of this happening may be made small enough given an application's security requirements by choosing a larger block size of the stream-cipher's outputs.

It should be emphasized that using a stream-cipher is not necessary to generate the arguments to the PRF. As the PRF maps a predictable sequence of numbers, e.g., by incrementing a seed or the like, to an unpredictable sequence. Accordingly, it is not needed to choose unpredictable arguments. Nevertheless, this is an option for additional security.

Server 310 receives from client 210 the arguments, e.g., arguments 231 and 232 for the pseudorandom function, wherein the argument is not encrypted according to the FHE scheme. The argument may be received through an intermediary such as storage device 130.

The arguments may be encrypted using non-FHE cryptography, e.g., using a conventional encryption, e.g., using symmetric or asymmetric encryption. If the arguments are transferred in encrypted form, they are decrypted by device 310 so that they are available in plain format.

Although arguments may be transferred in encrypted form, this is not necessary. As PRF 240 and 340 are keyed, the pseudorandom values generated by it are still unpredictable, even if the input arguments are known.

Both client device 210 and server device 310 compute pseudorandom values by applying the PRF to the arguments. In case of device 210, pseudorandom values, of which pseudorandom values 241 and 242 are shown, are computed by applying pseudorandom function 240 to the argument, of which arguments 231 and 232 are shown. This computation is a standard, plaintext computation. The PRF 240 of device 210 corresponds to a PRF 340 of device 310, except that PRF 340 produces its outputs encrypted according to the FHE scheme.

The function that is evaluated by server device 310 depends on FHE operations performed by server device 310, in particular the bootstrapping operations(s) and a collision-resistant function used to compute an initial ciphertext on which the PRF 340 computes. In particular, given PRF 340 the PRF 240 may be defined as the corresponding algorithm that operates on plaintext values instead on FHE encrypted values.

As discussed herein, some choices for the PRF 340 are particularly advantageous. For example, because the corresponding PRF 240 can be proven secure based on accepted hardness assumptions, and/or because PRF 340 is particularly efficient to compute in the FHE scheme, e.g., has a bootstrapping depth of 1, 2, or 3. The bootstrapping depth is the number of bootstrapping operations evaluated in a parallelized computation.

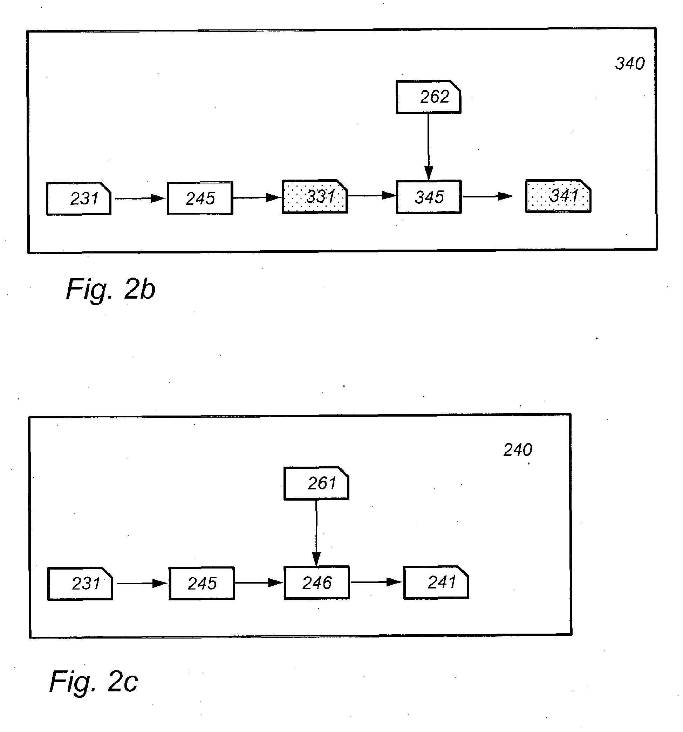

**Figure 2b** schematically shows an example of an embodiment of a pseudorandom function 240.

Given an argument, e.g., argument 231, server device 310 applies a collision-resistant function 245 to the argument. The output of collision-resistant function 245 is used to fill at least part of the elements of a randomized ciphertext 331, also referred to as c. The ciphertext 331 is indicated with a patterned background, as it has the form of an FHE encryption. Note though, that ciphertext 331 was not obtained by encrypting any particular plaintext. Accordingly, ciphertext 331 will likely have very high noise, probably near the maximum noise possible.

For the collision-resistant function a cryptographic hash function may be used, e.g., a hash from the sha-3 family.

For example, using TFHE type ciphertext, of the form $(a_1, ..., a_k, b)$, part of the collision-resistant function output may be used to assign values to any of these components. In particular, in an embodiment, all or at least multiple of the values $a_i$ are derived from the collision-resistant function output. Parts that are not assigned may be given a fixed value.

For example, in an embodiment the randomized ciphertext has the form $(a_1, ..., a_k, b)$, wherein all of $a_i$ and $b$ are derived from the collision-resistant function output.

For example, in an embodiment the randomized ciphertext has the form: $(a_i, ..., a_k, b)$, wherein all of $a_i$ are derived from the collision-resistant function output, but wherein b is fixed, in particular it may be 0. For example, the randomized ciphertext may be $(a_1, ..., a_k, 0)$.

For example, a part of the collision-resistant function output may be evaluated modulo a modulus, e.g., mod $q$, to obtain values in $\mathbb{Z}_q$. If the elements of a ciphertext in the chosen FHE are polynomials, then the polynomial coefficients may be generated in the same manner.

Typically, an FHE ciphertext like TFHE comprises a vector of components the value of which or at least multiple of which may be chosen as indicated.

Next the server device 310 performs a bootstrapping operation 345 on the randomized ciphertext 331, e.g., applies the bootstrapping algorithm of the FHE scheme. This has the effect of reducing the noise of randomized ciphertext 331 back to levels that are acceptable in the FHE scheme, so that the resulting FHE ciphertext may be regarded as a proper FHE encryption. In an embodiment, the output of bootstrapping 345 is used directly as the FHE encrypted pseudorandom value 341. However, in other embodiment, encrypted pseudorandom value 341 is derived from the FHE encrypted output of bootstrap 345. For example, FHE calculations may be performed on the output, e.g., to adjust a range of the number. For example, further bootstrappings may be performed to tailor PRF 340 to a particular desired PRF 240.

The output of a bootstrapping operation is normally encrypted under a different key than the FHE secret key $s$, e.g., under a further secret key $s'$. Sometime this is undesirable. For those cases, a key-switching operation may be performed as usual in FHE, to transcipher the encrypted value back to FHE secret key s, or any other key $s''$ as desired. Such a key-switching operation typically uses a key-switching key obtained at the server from the client. For example, when apply multiple bootstrapping, e.g., to obtain more complicated functions $f$, a key-switching back to a common key, in particular, secret key $s$ is convenient.

On the other hand, sometimes there is no objection to keeping the pseudorandom value encrypted under s'. In such cases, the transciphering to s may be delayed or even avoided.

A bootstrapping operation is keyed, e.g., depends on the secret key s, even though s is not available to server device 310. Furthermore, the bootstrapping may be programmable, e.g., evaluates a function $f$ on the input to the bootstrapping in addition to reducing noise levels. Embodiments may select a particular function $f$ in order to achieve a particular PRF 240.

In particular, the combination of the mapping from argument 231 to ciphertext 245, the bootstrapping operation, and in particular its programmed function $f$, and optional further derivation (not separately shown in figure 2b), together define the mapping from argument 231 to pseudorandom value 341. The same function may be evaluated in plaintext computation, thus defining a mapping from argument 231 to pseudorandom value 241.

The mapping may be selected to have various properties. For example, the mapping may be configured to map arguments drawn from a uniform distribution to values that are likewise drawn from a uniform distribution.

**Figure 2c** schematically shows an example of an embodiment of a pseudorandom function 240 for use in client device 210. Argument 231 is mapped through a collision-resistant function 245, which is the same function as used by server device 310 to the same randomized ciphertext. However, in PRF 240, a randomizing function 246 is applied to the randomized ciphertext. Randomizing function 246 uses secret key $s$, 261, to compute the result of bootstrap 345, and any optional further FHE operations, but in plaintext computation, thus resulting in plaintext pseudorandom value 241. Pseudorandom value 241 is equal to the FHE decryption of pseudorandom value 341.

In an embodiment, pseudorandom function 240 is configured for applying collision-resistant function 245 to the argument, filling at least part of the elements of a randomized ciphertext 331 with the output of the collision-resistant function, decrypting the randomized ciphertext using the secret key 261, $s$, and deriving the pseudorandom value from the decryption.

For example, deriving the pseudorandom value may comprise applying the functions for which bootstrap operations are configured in PRF 340 to the decrypted value.

Returning to figure 2b. If the FHE scheme is a TFHE scheme having ciphertexts of the form $(a_1, ..., a_k, b)$, and keys of the form $(s_1, ... , s_k)$, then the bootstrap operation will have the form

$$\left( c_1, ..., c_{k'}, d = \sum_{i=1}^{k'} c_i \cdot s_{i'} + e' + f\left( b - \sum_{i=1}^{k} a_i \cdot s_i \bmod q \right) \right).$$

In other words, the bootstrapped value will depend on the dot product $\sum_{i=1}^{k} a_i \cdot s_i \bmod q$. It was an insight of the inventors that such values can be made to have randomness properties like pseudorandom functions. In fact, making intelligent choices for the function $f$, this property may be used to evaluate a PRF which can be proven secure based on accepted hardness assumptions. Even if $b$ is selected as fixed, e.g., as 0, a pseudorandom function is still obtained. Even some, though not all, e.g., a minority, of the $a_i$ may be given a fixed value.

In particular, in an embodiment, an encrypted data item according to the FHE scheme (e.g., $(a_1, ... , a_k, b)$) comprises a tuple numbers and/or polynomials in a ring, including a masking tuple (e.g., $a = (a_1, ..., a_k)$), and a masked message (e.g., $b = (a, s) + e + \Delta \cdot m$, for secret key $s$ comprising a tuple of masking numbers and/or polynomials in a ring, dot product $(a, s)$, noise $e$, message $m$, and multiplier $\Delta$), and/or

- wherein the randomized ciphertext $((-a,b); (-a, 0))$ is regarded as the FHE encryption of a value depending on the dot product $(a, s)$, (e.g., $\lceil (\langle a, s \rangle \bmod q)/\Delta \rceil$ ), where $\lceil \cdot \rceil$ denotes a rounding function.

For example, given a desired PRF 240 that depends on the dot product $(\langle a, s \rangle \bmod q)$ may be decomposed into a sequence of one or more programmable bootstrapping operations. The programmable bootstrappings in the sequence being configured to provide the desired pseudorandom function in composition when performed on the randomized ciphertext. This may be used to form the naturally appearing dot product into a desired function, e.g., one for which hardness can be related to hardness criteria.

In an embodiment, the function for which bootstrap 345 and possibly further bootstrap operations are configured may be negacyclic. In some FHE schemes, e.g., TFHE, negacyclic are easier to evaluate. Decomposing a desired function into one or more negacyclic bootstrap operations is efficient. In particular a function 240 may be decomposed in a function decomposition of multiple bootstraps, one or all of which may be negacyclic.

Below some specific examples are given.

In an embodiment, the bootstrapping algorithm may be configured for the function

$$f(x) = (-1)^{msb(x)} \cdot \Delta \cdot \lceil \tfrac{p}{N} \cdot (x \bmod N) \rfloor,$$

and the pseudorandom function is

$$PRF_s(x) = (-1)^{msb(\langle a,s \rangle \bmod 2N)} \lceil \tfrac{p}{N} \cdot (\langle a,s \rangle \bmod N) \rfloor \bmod p.$$

In an embodiment, the bootstrapping algorithm is configured for the function $f(x) = (-1)^{msb(x)} \cdot \Delta \cdot \left( \lfloor \tfrac{p}{4N} \cdot (x \bmod N) \rfloor + \tfrac{1}{2} \right) \bmod q$, and the pseudorandom function is

$$PRF_s(x) = (-1)^{msb(\langle a,s \rangle \bmod 2N)} \cdot \left( \lfloor \tfrac{p}{4N} \cdot (\langle a,s \rangle \bmod N) \rfloor + \tfrac{1}{2} \right) + \tfrac{p}{4} - \tfrac{1}{2},$$

In an embodiment, the pseudorandom function is

$$PRF_s(x) := \lceil (p/2N) \cdot$$

$$(\langle a,s \rangle \bmod 2N) \rfloor,$$

the function

$$f(x) = \Delta \cdot \lceil x/\Delta \rfloor$$

being decomposed over two bootstrapping applications.

However, each of the examples can be varied considerably. In an embodiment, the PBS or multiple PBS, e.g., composition of multiple PBS, are configured for a function *f*, wherein the resulting PRF is indistinguishable from random under the LWE assumption.

However, even if the randomness is not fully equivalent to the LWE assumption, the output will still be highly random. For example, the function *f* may have a uniform output distribution, wherein the outputs of *f* are distributed uniformly across its range. For efficient implementation furthermore a negacylic *f* may be used.

In an embodiment, the function for which bootstrap 345 and possibly further bootstrap operations are configured may map a range (e.g., $\mathbb{Z}_{2N}$; $\mathbb{Z}_q$) of the argument (e.g., *x*) to a ring for the elements of encrypted data items according to the FHE scheme (e.g., $\mathbb{Z}_q$). For example, under FHE encryption a value may be added or subtracted.

In an embodiment, the function for which bootstrap 345 and possibly further bootstrap operations are configured may comprise a scalar multiple of the argument or the argument modulo a modulus.

In an embodiment, the function for which bootstrap 345 and possibly further bootstrap operations are configured may be the function

$$f(x) = (-1)^{msb(x)} \cdot \Delta \cdot \lceil \tfrac{p}{N} \cdot (x \bmod N) \rfloor,$$

and the pseudorandom function is

$$PRF_s(x) = (-1)^{msb(\langle a,s \rangle \bmod 2N)} \lceil \tfrac{p}{N} \cdot$$

$$(\langle \boldsymbol{a}, \boldsymbol{s} \rangle \bmod N) \rfloor \bmod p.$$

In an embodiment, the function for which bootstrap 345 and possibly further bootstrap operations are configured may be the function

$$f(x) = (-1)^{msb(x)} \cdot \Delta \cdot \left( \lfloor \tfrac{p}{4N} \cdot (x \bmod N) \rfloor + \tfrac{1}{2} \right) \bmod q,$$

and the pseudorandom function is

$$PRF_s(x) = (-1)^{msb(\langle a,s \rangle \bmod 2N)} \cdot \left( \lfloor \tfrac{p}{4N} \cdot \right.$$

$$(\langle \boldsymbol{a}, \boldsymbol{s} \rangle \bmod N) \rfloor + \tfrac{1}{2} \right) + \tfrac{p}{4} - \tfrac{1}{2}.$$

In an embodiment, the function for which bootstrap 345 and possibly further bootstrap operations are configured may be the pseudorandom function is $PRF_s(x) :=$

$$\lfloor (p/2N) \cdot (\langle \boldsymbol{a}, \boldsymbol{s} \rangle \bmod 2N) \rfloor,$$

the function

$$f(x) = \Delta \cdot \lceil x/\Delta \rfloor$$

being decomposed over two negacyclic bootstrapping applications.

Returning to figure 2a. Client device 210 obtains one or more pseudorandom values, shown are values 241 and 242. Server device 310 obtains one or more corresponding pseudorandom values, shown are FHE encrypted values 341 and 342. One application, for which the pseudorandom values may be used is to transfer data. There are many other applications of pseudorandom functions.

Shown in figure 2a, client device 210 may obtain original data, shown are original data 221 and 222; for example, these may be data blocks of the same size or smaller as the bit size of the pseudorandom values 241, 242. The original data is plaintext data. For example, the data may be text, e.g., an email, or computer code, or multidimensional sensor data, e.g., an image, etc. Optionally, device 210 comprises an original data generator 220. Original data generator 220 is configured to generate the original data. The original data may be obtained from another source, e.g., from a user, or from another computer or the like. For example, data generator 220 may generate data based on user input, e.g., by formatting the user input. Shown is original data 221, and 222. We may refer to the original, e.g., plain data as $p_1$, $p_2$, ...

Client device 210 generates a stream of pseudorandom values, shown are values 241, 242 by repeated application of the pseudorandom function, the generated stream being unencrypted at device 210. For example, the pseudorandom function may be applied to a stream of arguments. We can refer to the pseudorandom values as $c_1$, $c_2$, ... (not to be confused with the randomized ciphertext mentioned earlier). To encrypt original data, client device 210 may combine the pseudorandom values in plain form with the corresponding original data. The combining may be addition, e.g., modular addition. For example, the encrypted original data may be $e_1 = p_1 + c_1$, $e_2 = p_2 + c_2$, ... Shown are encrypted data 251, and 252. The encrypted data 251, 252 is sent to server device 310, possibly through an intermediary. Client device 210 may comprise a combiner 250 for this purpose.

Server device 310 generates a stream of pseudorandom values, shown are values 341, 342 by repeated applications of the pseudorandom function, the generated stream being FHE encrypted at device 310. For example, the pseudorandom function may be applied to a stream of arguments, which is the same stream as used in device 210. We can still refer to the pseudorandom values as $c_1$, $c_2$, ... But note that now they are FHE encrypted.

To decrypt the encrypted original data 251, 252, server device 310 may combine the pseudorandom values in encrypted form with the corresponding encrypted original data. The combining used is the opposite of the combining used in device 210. For example, the combining may be subtracting, e.g., modular subtraction. For example, the decryption may

be $p_1 = e_1 - c_1$, $p_2 = e_2 - c_2$, ... Shown are decrypted data 321, and 322. Server device 310 may comprise a combiner 350 for this purpose. Because the pseudorandom values are FHE encrypted, the output 321, 322, is also FHE encrypted.

Server device 310 may be configured to perform a further computation on FHE data 321, 322, e.g., apply a model to it, or some other computation.

In an embodiment, the stream-cipher encrypted data 251, 252 is transmitted and/or stored together with information on the corresponding arguments 231, 232. For example, the information may comprise the arguments themselves, or may comprise a seed to generate them. For example, information and stream-cipher encrypted data 251, 252 may both be transmitted, e.g., together, to server device 310. For example, information and stream-cipher encrypted data 251, 252 may both be stored, e.g., together, on data storage device 130, where server device 310 may obtain it.

Below several further optional refinements, details, and embodiments are illustrated. Some of the embodiments are specific to particular FHE schemes, and contain additional mathematical detail, some of which is optional.

For a public matrix $\mathbf{A} \in \mathbb{Z}_q^{n \times m}$ with moduli $p$ and $q$ such that $p < q$ and a secret vector $\mathbf{s} \in \mathbb{Z}^n$, the Learning-With-Rounding (LWR) problem [4] is to distinguish

$$\lfloor (p/q) \cdot (\mathbf{A}^T \mathbf{s} \bmod q) \rceil \bmod p$$

from a random vector in $\mathbb{Z}_p^m$. The conjectured post-quantum hardness of LWR immediately implies a pseudorandom generator (PRG) which expands a short string $\mathbf{s}$ into a longer pseudorandom string

$$\lfloor (p/q) \cdot$$

$$(\mathbf{A}^T \mathbf{s} \bmod q) \rceil \bmod p$$

using a public matrix $\mathbf{A}$. Given input $x$ and a secret key $\mathbf{s} \in \mathbb{Z}^n$, the PRF evaluation is defined to be

$$\lfloor (p/q) \cdot (\mathbf{A}(x)^T \mathbf{s} \bmod q) \rceil,$$

where the matrix $\mathbf{A}(x) = H(x) \in \mathbb{Z}_q^{n \times \ell}$ is derived from a random oracle. The random oracle model is widely used in cryptography to design secure and efficient constructions [7]. A common example of a cryptographic hash function that is often modelled as a random oracle is SHA-3 [1], but other options are available.

The more commonly used Learning-With-Errors (LWE) assumption [25] is known to imply the hardness of LWR. If m is a priori bounded, there is a reduction from LWE to LWR for a polynomial ratio $q/p = poly(\lambda)$ where $\lambda$ is the security parameter [2, 8]. Without an a priori bound on m the only known reduction requires $q/p = \lambda^{\omega(1)}$ [4]. Aside from these reductions, one may set secure LWR parameters concretely according to the best known cryptanalytic attacks.

In the following, when $D$ is a distribution, $x \sim D$ means that $x$ is a random variable distributed according to $D$. The notation $x \hookleftarrow D$ denotes the explicit action of sampling an element $x$ according to the distribution $D$. For a finite set $\mathcal{S}$, $U(\mathcal{S})$ stands for the uniform distribution over $\mathcal{S}$. For any $q \geq 2$, $\mathbb{Z}_q$ denotes the ring of integers with addition and multiplication modulo $q$. The notation

$$\lfloor \cdot \rceil$$

denotes the function that rounds an input to the nearest integer (rounding up in the case of a tie). If the input to this function is a vector, it is applied component-wise. The notation $\lfloor \cdot \rfloor$ denotes the floor function (i.e., the function that rounds *down* to the nearest integer).

**Hardness criteria**

We first recall the definition of the *Learning-With-Errors (LWE)* assumption introduced by Regev [25].

[LWE assumption] Let integers $m, n \geq 1$, $q > 2$ and let $\chi_s$, $\chi_e$ be distributions over . The $LWE_{n,m,q,\chi_s,\chi_e}$ problem requires distinguishing between the distributions

$$(\mathbf{A}^T, \mathbf{A}^T\,s + e) \text{ and } U(\mathbb{Z}_q^{m \times n} \times \mathbb{Z}_q^{m})$$

where $\mathbf{A} \sim U(\mathbb{Z}_q^{n \times m})$, $s \sim \chi_s^n$ and $e \sim \chi_e^m$. When the distribution of *s* is the uniform distribution $U(\mathbb{Z}_q^{n})$, the assumption is sometimes denoted by $LWE_{n,m,q,\chi_e}$.

We now recall the Module LWE problem [21], which generalizes both LWE and ring LWE [23]. We let $\Phi(X)$ a cyclotomic polynomial of degree N and let the rings $R = \mathbb{Z}[X]/(\Phi(X))$ and $R_q = R/(qR)$ for a modulus *q*.

[MLWE assumption] Let integers $m, k \geq 1$, $q \geq 2$. Let $\chi_s$ and $\chi_e$ be distributions over the ring *R*. The Module LWE ($MLWE_{k,m,q,\chi_s,\chi_e}$) problem requires distinguishing between the distributions

$$(\mathbf{A}^T, \mathbf{A}^T\,s + e) \text{ and } U(R_q^{m \times k} \times R_q^{m})$$

where $\mathbf{A} \sim U(R_q^{k \times m})$, $s \sim \chi_s^k$ and $e \sim \chi_e^m$. The distribution for s is sometimes chosen as the uniform distribution $\chi_s = U(R_q)$. We note that, when the degree *N* of $\Phi(X)$ is 1, MLWE becomes the usual LWE problem in dimension *k*. When *k* = 1, it corresponds to the ring LWE problem (i.e., distinguishing

$$\{(a, a \cdot s + e) | a \hookleftarrow$$

$$U(R_q), s \hookleftarrow \chi_s, e \hookleftarrow \chi_e\}$$

from

$$\{(a, b) | a, b \hookleftarrow U(R_q)\}$$

) introduced in [23].

In the general case for *n* > 1 and *k* > 1, the problem is believed to remain hard even when the secret s is sampled from a narrow distribution instead of being uniform over $R_q^k$. For example, it was shown when *s* is a vector of integer polynomials with uniform coefficients in a small interval [12], or even with binary coefficients [11].

We now recall the definition of the *Learning-With-Rounding* (LWR) problem [4]. [LWR assumption] Let integers *m*, $n \geq 1$, $q > p \geq 2$ and let $\chi_s$ be distributions over Z. The *Learning-With-Rounding* ($LWR_{n,m,q,\chi_s}$) problem requires distinguishing between the distributions

$$(\mathbf{A}^T, \lceil (p/q) \cdot (\mathbf{A}^T\,s \bmod q) \rfloor \bmod p) \text{ and } U(\mathbb{Z}_q^{m \times n} \times \mathbb{Z}_p^{m})$$

where $\mathbf{A} \sim U(\mathbb{Z}_q^{n \times m})$ and $s \sim \chi_s^n$.

When the number m of samples is a priori bounded, the LWE assumption is known [2, 8] to imply the hardness of LWR for a polynomial ratio $q/p = poly(\lambda)$. When there is no pre-determined upper bound on the number of samples, the only known reduction [4, Theorem-3.2] from LWE to LWR requires a super-polynomial ratio $q/p = \lambda^{\omega(1)}$. However, it is quite plausible that LWR remains hard for $q/p = poly(\lambda)$ even for an a priori unbounded number of samples. As discussed in [4, 9], as long as $q/p = \Omega(\sqrt{n})$ and $q/p$ is an integer (so that $\lceil (p/q) \cdot U(\mathbb{Z}_q) \rceil = U(\mathbb{Z}_p)$), LWR may be exponentially hard even for quantum algorithms.

The LWR problem naturally extends to the module setting (e.g., [17]), where it is defined as follows.

[MLWR assumption] Let integers $m$, $k \geq 1$, $q > p \geq 2$. Let $\Phi(X)$ a cyclotomic polynomial of degree $N$ and let the rings $R = \mathbb{Z}[X]/(\Phi(X))$ and $R_q = R/(qR)$. Let $\chi_s$ a distribution over $R$. The Module LWR (MLWR$_{k,m,q,\chi_s}$) problem requires distinguishing between the distributions

$$(\mathbf{A}^T, \lceil \tfrac{p}{q} \cdot (\mathbf{A}^T \, s) \rceil) \text{ and } U(R_q^{m \times k} \times R_p^m)$$

where $\mathbf{A} \sim U(R_q^{k \times m})$ and $s \sim \chi_s^k$. In both LWR and MLWR, the "nearest integer" rounding function

$$\lceil \cdot \rfloor$$

can be replaced by other random functions (like the floor $\lfloor \cdot \rfloor$ or ceiling $\lceil \cdot \rceil$ functions) without impacting the difficulty of the problem. The floor-rounding variant was notably used in [14].

**Pseudorandom Functions based on the (Ring/Module) Learning-With-Rounding Problem**

A weak pseudorandom function may be based on the hardness of the LWR problem. This weak PRF maps a random input $a \in \mathbb{Z}_q^n$ to the output $wPRF_s(a) =$

$$\lceil (p/q) \cdot (\langle a, s \rangle \bmod q) \rfloor \bmod p,$$

where $s \in \mathbb{Z}^n$ is the secret key.

By introducing a random oracle $H: \{0,1\}^\ell \to \mathbb{Z}_q^n$, the aforementioned weak PRF can be turned into a full PRF by computing $a = H(x) \in \mathbb{Z}_q^n$ when the PRF has to be evaluated on an arbitrary input $x \in (0,1)^\ell$. It is precisely defined as follows.

The secret key is a vector $s = (s_1, \ldots, s_n) \sim \chi_s^n$ where each $s_i$ is sampled from a distribution $\chi_s$ specified by public parameters. These public parameters also contain the description of a hash function $H: \{0,1\}^\ell \to \mathbb{Z}_q^n$ (modelled as a random oracle) and two moduli $p$ and $q$ where $p$ divides $q$. Typically, for LWR-based constructs, $\chi_s$ is the uniform distribution over $\mathbb{Z}_q$. Alternatively, $\chi_s$ can be a discrete Gaussian distribution with a suitable standard deviation $\sigma$. For our purposes, in an embodiment, we assume that $\chi_s$ has a support significantly smaller than $\mathbb{Z}_q$ for the secret keys to be compatible with different moduli. For example, we could take $\chi_s$ to be the uniform distribution over binary vectors.

A function evaluation is then defined as

$$x \mapsto PRF_s(x) \triangleq \lceil \tfrac{p}{q} \cdot (\langle H(x), s \rangle \bmod q) \rfloor \bmod p \qquad (1)$$

and outputs a scalar in $\mathbb{Z}_p$. To output $t$ pseudorandom elements in $\mathbb{Z}_p$, we can extend it as

$$x \mapsto PRF_s(x) \triangleq (y_1, \ldots, y_t)$$

where

$$y_i = \lceil \tfrac{p}{q} \cdot (\langle H(x,i), s \rangle \bmod q) \rfloor \bmod p \quad \forall i \in \{1, \ldots, t\}.$$

Alternatively, we can use a random oracle $H: \{0,1\}^\ell \to \mathbb{Z}_q^{m \times n}$ that outputs a matrix, for a large enough $m$, and define

$$x \mapsto PRF_s(x) \triangleq \lceil \tfrac{p}{q} \cdot (H(x) \cdot s \bmod q) \rfloor \bmod p \qquad (2)$$

which outputs pseudorandom vectors over $\mathbb{Z}_p^m$.

It is possible to remove the random oracle and replace H(x) by a different encoding of the input. For example, Banerjee and Peikert [3] encode the input $x = (x_1, \ldots, x_\ell)^\mathsf{T} \in \{0,1\}^\ell$ as a product

$$A(x) = A_{x_1} \cdot G^{-1}(A_{x_2} \cdot G^{-1}(\ldots A_{x_{\ell-1}} \cdot G^{-1}(A_{x_\ell})) \ldots)) \qquad (3)$$

where $A_0, A_1 \sim U(\mathbb{Z}_q^{n \times n\lceil \log q \rceil})$ are public random matrices and $G^{-1}(\cdot)$ is a binary decomposition function that inputs a matrix $B \in \mathbb{Z}_q^{n \times n\lceil \log q \rceil}$ and outputs a binary $G^{-1}(B) \in \{0,1\}^{n\lceil \log q \rceil \times n\lceil \log q \rceil}$. Using this encoding, Banerjee and Peikert [3] define the PRF

$$x \mapsto PRF_s(x) \triangleq \lceil \tfrac{p}{q} \cdot (A(x)^\mathsf{T} \cdot s \bmod q) \rfloor \bmod p \qquad (4)$$

In [10], Boneh *et al.* considered another encoding that maps the input $x = (x_1, \ldots, x_\ell)^\mathsf{T} \in \{0,1\}^\ell$ to a matrix

$$A(x) = \prod_{i=1}^{\ell} G^{-1}(A_{x_i})$$

which is also used to define

$$PRF_s(x) \triangleq \lceil \tfrac{p}{q} \cdot (A(x)^\mathsf{T} \cdot s \bmod q) \rfloor \bmod p.$$

For this encoding of the input, the secret key $s \sim U(\mathbb{Z}_q^{n\lceil \log q \rceil})$ is required to be a uniform vector over $\mathbb{Z}_q$ since it is multiplied by small-norm matrices $G^{-1}(A_{x_i}) \in \{0,1\}^{n\lceil \log q \rceil \times n\lceil \log q \rceil}$. In contrast, the encoding of Banerjee and Peikert (3) allows a small-norm s.

The security proofs of [10, 3] require the ratio $q/p$ to be super-polynomial (or even exponential in the input length $q/p = 2^{\Omega(\ell)}$ in the case of [10]). Here, we cannot efficiently evaluate them using programmable bootstrapping for a super-polynomial $q/p = \lambda^{\omega(1)}$ since it would require lookup tables of super-polynomial size. However, we can do it if we heuristically rely on the pseudorandomness of these PRFs for parameters such that $q/p = \mathrm{poly}(\lambda)$. In these parameter regimes, the security proofs of [10, 3] do not work any longer but no attack has been reported as long as q/p is at least $\Omega(n^{1/2})$ where n is the dimension of *s*.

In the ring setting, we can also consider a variant implicitly suggested in [4]. Namely, let the polynomial rings $R_q$ = R/(qR) where $R = \mathbb{Z}[X]/(\Phi(X))$ for some cyclotomic polynomial $\Phi(X)$ of degree N, one can use a hash function H: $\{0,1\}^{\ell}$ -> $R_q$ that ranges over $R_q$ = R/(qR). Then, the ring-LWR assumption yields the PRF family

$$x \mapsto PRF_s(x) \triangleq \lceil \tfrac{p}{q} \cdot (H(x) \cdot s \bmod q) \rfloor \bmod p \qquad (5)$$

where the secret key is $s \in R$ and $H(x) \cdot s \bmod q$ is a product of polynomials in $R_q$. In this case, the output value of (5) lives in $R_p$ = R/(pR), which is isomorphic to $\mathbb{Z}_p^N$ if deg($\Phi(X)$) = N. A single output element can thus live in an exponentially large space.

Using the module-LWR assumption, one can also combine the ideas of (6) and (5). If we use a hash function $H: \{0,1\}^{\ell} \to R_q^{m \times k}$, we choose a secret key $\boldsymbol{s} \in R^k$ which defines the PRF

$$x \mapsto PRF_s(x) \triangleq \lceil \tfrac{p}{q} \cdot (H(x)^{\top} \cdot \boldsymbol{s} \bmod q) \rfloor \bmod p \qquad (6)$$

which ranges over $R_p^m$.

When proving the pseudorandomness of these PRF families (in the random oracle model), we may use an instance of LWR (or ring/module-LWR) where the number of samples is not a priori bounded since each queried input *x* is mapped to a different sample (i.e., the number of samples is as large as the number of evaluation queries).

Therefore, in an embodiment, we choose a super-polynomial $q/p = \lambda^{\omega(1)}$ if we want to rely on known LWE-to-LWR reductions [4]. In practice, one may prefer a more efficient choice of parameters with $q/p = poly(\lambda)$ and rely on the plausible hardness of LWR in this parameter regime. In this case, in an embodiment, one may set $q/p$ as an integer larger than $\Omega(\sqrt{n})$ if *n* is the dimension of *s*.

In [4, 9], LWR was conjectured to be exponentially hard when $q/p = \Omega(\sqrt{n})$ and assuming uniform secret keys (i.e., $\chi_s = U(\mathbb{Z}_q)$). In order to homomorphically evaluate the PRF using programmable bootstrapping, it is more convenient to sample the seed s from a binary or ternary distribution. Fortunately, even for the uniform binary distribution $\chi_s$ = $U(\{0,1\})$, an estimate of the lattice hardness gives more than 128 bits of security for an unbounded number of samples when *p* and Q are small. For $q = 2^{32}$ and $p = 16$ with $n = 1024$, the estimator gives about 373 bits of security. Even if we set $q = 4096 = 2^{12}$ and $p = 16$, the best attack found by the estimator takes $2^{506}$ time. Lattice hardness use the approach in: Martin R. Albrecht, Rachel Player, and Sam Scott, Volume 9, Issue 3, Pages 169-203, ISSN (Online) 1862-2984, ISSN (Print) 1862-2976 DOI: 10.1515/jmc-2015-0016, October 2015, "On the concrete hardness of Learning with Errors.", included herein by reference.

**First series of detailed embodiments**

The goal is to homomorphically evaluate a PRF based on the difficulty of the (Module) LWR problem, which is now a well-established assumption in lattice-based cryptography. We aim to homomorphically evaluate either one the original PRFs described above or, alternatively, a modified PRF that is guaranteed to be as secure as one of those described above.

A general construction may have the following features and properties.

- It assumes a polynomial ring R, typically $R = \mathbb{Z}[X]/(\Phi(X))$ is a cyclotomic ring where $\Phi(X)$ has degree N.
- It works for an FHE scheme where secret keys are vectors of ring elements $(s_1, ..., s_k) \in R^k$. If the message space is $R_p$ for a modulus $p < q$, the secret-key variant of the FHE scheme has ciphertexts of the form

$$(a_1, \ldots, a_k, \ b = \sum_{i=1}^{k} a_i \cdot s_i + e + (q/p) \cdot m) \qquad (7)$$

where

$$a_1, \ldots, a_k \hookleftarrow U(R_q), e \hookleftarrow \chi_e$$

is a noise sampled from some distribution $\chi_e$ over $R$, and $m \in R_p$ is the plaintext. Typically, $p|q$, or even $q = p^k$; both $p$ and $q$ could be powers, e.g., of 2 or 3.

- The FHE scheme has a bootstrapping algorithm $\overline{Boot}[f](a_i, b_i)$ that allows evaluating a function $f: R_q \rightarrow R_q$ such that, on input of a ciphertext $(a_1, \ldots, a_k, b)$ of the form (7) for a (possibly very large) noise $e$, the bootstrapping algorithm outputs a ciphertext

$$\left(c_1, \ldots, c_{k'}, \ d = \sum_{i=1}^{k'} c_i \cdot s_{i'} + e' + f(b - \sum_{i=1}^{k} a_i \cdot s_i \bmod q)\right) \qquad (8)$$

for a small noise $e' \in R$ such that $|e'| \leq \beta$ for some $\beta \ll q$ and a secret key $(s_{1'}, \ldots, s'_{k'}) \in R^{k'}$ that may be different from $(s_1, \ldots, s_k)$.

- It assumes that the PRF secret key is a vector $\boldsymbol{s} \in R^k$ encrypted by a ciphertext bsk that can be seen as a bootstrapping key for the FHE scheme. For example, a client device may choose plain secret keys $s$, and $s'$ and compute bsk = encryption $_{s'}(s)$. The client may also compute key-switching keys if needed.
- If the input space of the PRF is $\{0,1\}^\ell$, the general construction uses a collision-resistant function

$F_a: \{0,1\}^\ell \rightarrow R_q^{m \times k}$ that maps an input $x \in \{0,1\}^\ell$ to an input-dependent matrix

$\mathbf{A}(x) = F_a(x) \in R_q^{m \times k}$ . Namely, given the description of $F_a$ it should be computationally infeasible to find distinct $x, x'$ such that $F(x) = F(x')$ if they exist at all.

- It also uses a function $F_b: \{0,1\}^\ell \rightarrow R_q^m$ that maps an input $x \in \{0,1\}^\ell$ to a ring element $R_q$. We make no specific requirement on $F_b$ (in particular, it can be a constant function).
- The function $f: R_q \rightarrow R_q$ defined at item (3) should satisfy the property that, for any input $x \in \{0,1\}^\ell$, the distribution

$$\{([\boldsymbol{a}_1| \ldots |\boldsymbol{a}_m]^T = F_a(x), \ (b_1, \ldots, b_m)^T = F_b(x),$$

$$(f(b_1 - \langle \boldsymbol{a}_1, \boldsymbol{s}\rangle \bmod q), \ldots, f(b_m - \langle \boldsymbol{a}_m, \boldsymbol{s}\rangle \bmod q))^T)\}$$

is computationally indistinguishable from

$$\{([\boldsymbol{a}_1| \ldots |\boldsymbol{a}_m]^T = F_a(x), \ (b_1, \ldots, b_m)^T = F_b(x), \ \Delta \cdot U(R_p^m)\}$$

where $U(R_p^m)$ denotes the uniform distribution over $R_p^m$ . Note that this would also work if $f$ is not negacyclic.

The homomorphic PRF evaluation algorithm then proceeds as follows in a possible embodiment.

$Eval_{pp}(bsk, x)$: Given public parameters pp = $(R, q, p, \beta)$, an evaluation key bsk and an input $x \in \{0,1\}^\ell$, compute

$$\mathbf{A}(x) = [\boldsymbol{a}_1| \ldots |\boldsymbol{a}_m]^T = F_a(x) \in R_q^{m \times n},$$

and $\boldsymbol{b} = (b_1, \ldots, b_m)^T = F_b(x) \in R_q^m$ and do the following:

(a) For each i ∈ [m], compute

$$(\boldsymbol{c}_i = (c_{i,1}, \dots, c_{i,k}), d_i) = \overline{Boot}[f](-\boldsymbol{a}_i, b_i)$$

(b) Output the evaluated ciphertext $(ct_1, \dots, ct_m)$, where $ct_i = (\boldsymbol{c}_i, d_i) \in R_q^{k+1}$ for each $i \in [m]$.

Various other embodiments may be obtained by taking particular choices for the objects defined above, e.g., parameters, rings, dimensions, etc.

At step 1, if we define $\Delta = q/p$ and assume that $\Delta$ divides $q$, we note that each ciphertext $(\boldsymbol{a}_i, b_i) \in R_q^{k+1}$ can be written

$$(a_{i,1}, \dots, a_{i,k}, b_i)$$

$$= (a_{i,1}, \dots, a_{i,k}, \underbrace{\sum_{j=1}^k a_{i,j} \cdot s_i \; + \; \Delta \cdot \lfloor (b_i - \sum_{j=1}^k a_{i,j} \cdot s_i \bmod q)/\Delta \rfloor}_{\triangleq Q_i}$$

$$+ \underbrace{((b_i - \sum_{j=1}^k a_{i,j} \cdot s_i \bmod q) \bmod \Delta)}_{\triangleq r_i} \bmod q) \qquad (9)$$

by decomposing $b_i - \sum_{i=1}^k a_i \cdot s_i \bmod q$ into a quotient $Q_i$ and a remainder $r_i \in R$ (interpreted as a polynomial with coefficients in $[-\Delta/2, \Delta/2)$) via an Euclidean division of each coefficient over $\mathbb{Z}$.

Since $b_i - \sum_{j=1}^k a_{i,j} \cdot s_i \bmod q = \Delta \cdot Q_i + r_i$, property (7) implies that the distribution of $f(\Delta \cdot Q_i + r_i)$ should be indistinguishable from $\Delta \cdot U(R_p)$ conditionally on $(a_{i,1}, \dots, a_{i,k}, b_i)$.

For example, if we consider the BFV FHE [18] (which can be obtained by setting $k = m = 1$), the function

$$f(x) = \Delta \cdot \lceil x/\Delta \rfloor$$

is the function that performs the standard (non-programmable) bootstrapping [18, 19] and only refreshes the input ciphertext

$$(-a, \; b = -a \cdot s \; + \; \Delta \cdot Q \; + \; \underbrace{r}_{\in [-\Delta/2, \Delta/2)} \; ) \in R_q^2$$

by computing $(c, d) \in R_q^2$ as a low-noise encryption of the same plaintext $Q$. Then, by setting $b = 0$, we obtain that

$$Q = \lceil (b + (p/q) \cdot a \cdot s \bmod q) \rfloor = \lceil (p/q) \cdot (a \cdot s \bmod q) \rfloor \bmod p,$$

so that the bootstrapping algorithm outputs a BFV encryption $(c, d)$ of the Ring-LWR-based

$$\mathrm{PRF} \; \lceil (p/q) \cdot (a \cdot s \bmod q) \rfloor,$$

where $a = F_a(x)$ is an encoding of the input.

**Second series of detailed embodiments**

The plaintext space is $\mathbb{Z}_p$ and the ciphertext modulus is $q$. It is assumed that $p$ divides $q$ so that $\Delta = q/p \in \mathbb{Z}$. Furthermore, bsk denotes a bootstrapping key for TFHE/FHEW where the secret key is an LWR-based PRF seed $s \in \{0,1\}^n$. The parameter $N$ is assumed to be a power-of-two equal to the degree of a cyclotomic polynomial. In the descriptions hereafter, we assume that $H: \{0,1\}^\lambda \times \{0,1\}^\ell \to \mathbb{Z}_q^n$ is a random oracle and set the encoding of an input $x \in \{0,1\}^\ell$ to be

$$\mathbf{A}(x) = [\boldsymbol{a}_1 | \dots | \boldsymbol{a}_m] = [H(1,x) | \dots | H(m,x)] \in \mathbb{Z}_q^{n \times m}.$$

The first argument of H may be a counter i whose binary representation fits within $\lambda$ bits. This is w.l.o.g. since we assume that the number of evaluations is polynomial in $\lambda$.

We then apply the embodiments hereafter to each column $\boldsymbol{a}_i \in \mathbb{Z}_q^n$ of $\mathbf{A}(x)$ so as to obtain a set of m LWE ciphertexts that encrypt the components of $\mathrm{PRF}_s(x) =$

$$(p/q) \cdot (\lceil \mathbf{A}(x)^\top \cdot \boldsymbol{s} \bmod q) \rceil \bmod p.$$

Importantly, these rows can be processed in parallel using multiple threads so as to minimize the bootstrapping depth (i.e., the number of sequential bootstraps).

Alternatively, one can encode $x$ as a matrix $\mathbf{A}(x) = H(x)$ using a random oracle $H: \{0,1\}^\ell \to \mathbb{Z}_q^{n \times m}$. One may also use a structured matrix $\mathbf{A}$ to represent polynomial multiplication within a ring yielding a ring/module LWR-based PRF. Yet another alternative is to use the standard-model (i.e., non-random-oracle-based) input encoding (3) suggested in [3]. In this case, we may set $m = n\lceil \log q \rceil$.

If we just want to evaluate a weak PRF, we do not need any input encoding as we can simply define the input to be the matrix $\mathbf{A} \in \mathbb{Z}_q^{n \times m}$ itself. A weak PRF is a PRF that only guarantees pseudorandomness for random inputs (instead of arbitrary, adversarial-chosen inputs).

Aside from the encoding variations, some embodiments also make it possible replace the rounding function with the floor or ceiling functions in the output ciphertext. The rounding function

$$\lceil \cdot \rfloor$$

is applicable to all embodiments described in the next subsections. However, the floor function $\lfloor \cdot \rfloor$ is only supported by the first two embodiments.

*Boot[f]* will refer to the TFHE/FHEW programmable bootstrapping procedure with univariate negacyclic function *f*. In the embodiments based on the programmable bootstrapping of TFHE/FHEW, we rely on the theorem mentioned below, which is quoted from [22] but is implied by earlier results on the programmable bootstrapping of LWE ciphertexts for negacyclic functions.

In the notations, when

$$(\boldsymbol{a}, b) = (\boldsymbol{a}, \langle \boldsymbol{a}, \boldsymbol{s} \rangle + e + m \lceil q/p \rceil) \in \mathbb{Z}_q^{n+1}$$

is an LWE ciphertext for a secret key $\boldsymbol{s} \in \mathbb{Z}^n$ and a noise $e \sim \chi_e$. We denote by $Dec_s(\boldsymbol{a}, b) = b - \langle \boldsymbol{a}, \boldsymbol{s} \rangle \bmod q$ the decoding function (a.k.a. phase function) which outputs a noisy encoding

$$e + m \lceil q/p \rceil$$

of the plaintext $m$.

We now state the aforementioned theorem.

[Theorem 1] Let positive integers $n$, $q$ and $Q$ such that $q$ divides $Q$ and $Q$ is set to a power of 2. There is a bootstrapping procedure *Boot* with the following property: For any LWE ciphertext $(a, b) \in \mathbb{Z}_q^{n+1}$ and any function $f: \mathbb{Z}_q \to \mathbb{Z}_Q$ such that $f(x + q/2) = -f(x) \bmod Q$, the procedure Bo*ot*[*f*]($a$, $b$) outputs a ciphertext $(c, d) \in \mathbb{Z}_Q^{n+1}$ such that

$$Dec_s(c, d) = f(Dec_s(a, b)) + e(\bmod Q) \;,$$

where $|e| < \beta$, for a noise bound $\beta$ that only depends on the operations performed by *Boot* and not on the input ciphertext ($a$, $b$).

The inventors found a way of performing homomorphic PRF evaluation using a small number of sequential (i.e., low-depth) bootstrappings with functions satisfying the condition on $f$ from the theorem. Whenever we apply this theorem in depth 1 and depth 2, we take $q = Q = 2N$, where $N$ is the dimension of the ring $R = \mathbb{Z}[X]/(X^N + 1)$ over which the bootstrapping key bsk operates. In depth 3, we sometimes apply this to negacyclic functions that use other moduli.

Below are three embodiments are further detailed, which are particularly advantageous.

**First embodiment**

For this embodiment, we use the negacyclic function $f: \mathbb{Z}_{2N} \to \mathbb{Z}_q$ defined by:

$$f(x) = \begin{cases} \Delta \cdot \lceil \frac{p}{N} \cdot x \rfloor \bmod q & \text{if } x \in [0, N-1] \\ -\Delta \cdot \lceil \frac{p}{N} \cdot (x - N) \rfloor \bmod q & \text{if } x \in [N, 2N-1] \end{cases} \qquad (10)$$

$$= (-1)^{msb(x)} \cdot \Delta \cdot \lceil \frac{p}{N} \cdot (x \bmod N) \rfloor$$

To analyze this embodiment, we view $(-a, 0) \in \mathbb{Z}_{2N}^{n+1}$ as a highly noisy ciphertext that informally "encrypts" $\lceil (\langle a, s \rangle \bmod q)/\Delta \rfloor$. Written differently, the vector (-$a$, 0) is viewed as an encryption with phase $\langle a, s \rangle \bmod q$. By Theorem 1, the $Eval_{pp}^{(1)}$ evaluation algorithm (which is described hereafter) outputs a ciphertext encrypting

$$PRF_s(x) = (-1)^{msb(\langle a, s \rangle \bmod 2N)} \lceil \frac{p}{N} \cdot (\langle a, s \rangle \bmod N) \rfloor \bmod p.$$

Note that this is not the standard LWR-based PRF. However, it is still pseudorandom via a reduction from the pseudorandomness of a *standard* LWR-based PRF. Indeed, we can prove the following result.

Assume $p = 2^{\ell_p}$ and $N = 2^{\ell_N}$ are powers-of-two such that $k: = \ell_N - \ell_p - 1 > 0$. Take a random function $H: \{0,1\}^* \to (\mathbb{Z}_{2N})^n$ and assume that $G_s: \{0,1\}^* \to \mathbb{Z}_{4p}$,

$$G_s(x) := \lfloor \frac{4p}{2N} \cdot (\langle H(x), s \rangle \bmod 2N) \rfloor \bmod 4p$$

is pseudorandom for s sampled uniformly from $\{0,1\}^n$. Then the function $PRF_s \colon \{0,1\}^* \to \mathbb{Z}_p$,

$$PRF_s(x) := (-1)^{msb(\langle H(x),s\rangle \bmod 2N)} \cdot \lceil \tfrac{p}{N} \cdot (\langle H(x), s\rangle \bmod N)\rfloor \bmod p$$

is pseudorandom where s is also sampled uniformly in $\{0,1\}^n$.

This embodiment describes a depth-1 bootstrapping algorithm. As a result, one may choose not to implement the key-switching element of the bootstrapping procedure. Indeed, by removing the final key-switching, we obtain an encryption of $PRF_s(x)$ under an LWE secret key which is *not* **s** but the (ring-)GSW secret key s' such that bsk = GSW. $Enc_{s'}(\boldsymbol{s})$.

A summary of the algorithmic steps of this embodiment are as follows: $Eval_{pp}^{(1)}(\text{bsk}, x)$ : Given public parameters pp = $(n, N, q, p)$, a bootstrapping key bsk and input $x \in \{0,1\}^\ell$, compute the input-dependent ciphertext $(\boldsymbol{-a}, 0) = (-H(x), 0) \in \mathbb{Z}_q^{n+1}$ and do the following:

(a)

$$(\boldsymbol{c}, d) = Boot[f](-\boldsymbol{a}, 0)(\bmod q).$$

(b)

$$\text{Output the ciphertext ct} = (\boldsymbol{c}, d) \in \mathbb{Z}_q^{n+1}.$$

Note that, if we modify the negacyclic function (10) and replace the rounding

$$\lceil \cdot \rfloor$$

by the floor function $\lfloor \cdot \rfloor$, we can also evaluate the floor-function analogue of the same PRF: i.e.,

$$PRF_s(x) = (-1)^{msb(\langle a,s\rangle \bmod 2N)} \cdot \lfloor (p/N) \cdot \langle \boldsymbol{a}, \boldsymbol{s}\rangle \bmod N\rfloor.$$

This modified negacyclic function still satisfies our condition (7) in Section 4 because of the following lemma, which is proven in [15]. We note that one may also trivially replace the rounding function with the ceiling function $\lceil \cdot \rceil$.

Assume $p = 2^{\ell_p}$ and $N = 2^{\ell_N}$ are powers-of-two such that $k := \ell_N - \ell_p > 0$. Take a random function $H \colon \{0,1\}^* \to (\mathbb{Z}_{2N})^n$ and assume that $G_s \colon \{0,1\}^* \to \mathbb{Z}_{2p}$,

$$G_s(x) := \lfloor \tfrac{2p}{2N} \cdot (\langle H(x), s\rangle \bmod 2N)\rfloor \bmod 2p$$

is pseudorandom for s sampled uniformly from $\{0,1\}^n$. Then the function $PRF_s \colon \{0,1\}^* \to \mathbb{Z}_p$,

$$PRF_s(x) := (-1)^{msb(\langle H(x),s\rangle \bmod 2N)} \cdot \lfloor \tfrac{p}{N} \cdot (\langle H(x), s\rangle \bmod N)\rfloor \bmod p$$

is pseudorandom where s is also sampled uniformly in $\{0,1\}^n$.

**Second embodiment**

For this embodiment, we evaluate a PRF whose range is half of the plaintext space. This is useful in cases where TFHE/FHEW is set to use a padding bit in the plaintext space. We define the negacyclic function $f': \mathbb{Z}_{2N} \to \mathbb{Z}_q$ as

$$f'(x) = \begin{cases} \Delta \cdot \left( \lfloor \frac{p}{4N} \cdot (x \bmod N) \rfloor + \frac{1}{2} \right) \bmod q & \text{if } x \in [0, N-1] \\ -\Delta \cdot \left( \lfloor \frac{p}{4N} \cdot (x \bmod N) \rfloor + \frac{1}{2} \right) \bmod q & \text{if } x \in [N, 2N-1] \end{cases} \quad (11)$$

$$= (-1)^{msb(x)} \cdot \Delta \cdot \left( \lfloor \frac{p}{4N} \cdot (x \bmod N) \rfloor + \frac{1}{2} \right) \bmod q$$

This embodiment concretely evaluates the function $PRF'_s : \{0,1\}^\ell \to \{0, \dots, p/2 - 1\}$ defined by

$$PRF'_s(x) := (-1)^{msb(\langle a,s\rangle \bmod 2N)} \cdot \left( \lfloor \frac{p}{4N} \cdot (\langle a,s\rangle \bmod N) \rfloor + \frac{1}{2} \right) + \frac{p}{4} - \frac{1}{2}$$

$$= (-1)^{msb(\langle a,s\rangle \bmod 2N)} \cdot \lfloor \frac{p}{4N} \cdot (\langle a,s\rangle \bmod N) \rfloor + \frac{p}{4} -$$

$msb(\langle a, s\rangle \bmod 2N)$, which uses the floor function $\lfloor \cdot \rfloor$ (recall that we assume that $p > 4$ is a power of 2, so that the output is well-defined).

As this embodiment only requires bootstrapping depth one, we may once again choose to not implement keyswitching in the bootstrapping procedure. The algorithmic steps of this embodiment are as follows:

$Eval_{pp}^{(1')}(bsk, x)$ : Given public parameters pp = $(n, N, q, p)$, a bootstrapping key bsk and input $x \in \{0,1\}^\ell$, compute the input-dependent ciphertext $(-a, 0) = (-H(x), 0) \in \mathbb{Z}_q^{n+1}$ and do the following:

(a)

$$(c, d) = Boot[f'](-a, 0)(\bmod q)$$

(b)

$$(\bar{c}, \bar{d}) = (c, d) + \left( 0, \Delta \cdot \left( \frac{p}{4} - \frac{1}{2} \right) \right) (\bmod q)$$

Output the ciphertext $ct = (\bar{c}, \bar{d}) \in \mathbb{Z}_q^{n+1}$.

Since we do not homomorphically evaluate a standard LWR-based PRF we must prove that condition (7) is satisfied. One can show this via applying the shift $\frac{p}{4} - \frac{1}{2}$ to $PRF''$ in the following lemma: Assume $p = 2^{\ell_p}$ and $N = 2^{\ell_N}$ are powers-of-two such that $k := \ell_N - \ell_p + 2 > 0$ (i.e. $N > p/4$). Take a random function $H : \{0,1\}^* \to (\mathbb{Z}_{2N})^n$ and assume that $G_s : \{0,1\}^* \to \mathbb{Z}_{p/2}$,

$$G_s(x) := \lfloor \frac{p/2}{2N} \cdot (\langle H(x), s\rangle \bmod 2N) \rfloor$$

is pseudorandom for s sampled uniformly from $\{0,1\}^n$. Then the function

$$PRF''_s : \{0,1\}^* \to \left\{ \pm \frac{1}{2}, \pm \left(1 + \frac{1}{2}\right), \pm \left(2 + \frac{1}{2}\right), \ldots, \pm \left(\frac{p}{4} - 1 + \frac{1}{2}\right) \right\},$$

$$PRF''_s(x) := (-1)^{msb(\langle H(x),s\rangle \bmod 2N)} \cdot \left( \lfloor \frac{p/4}{N} \cdot (\langle H(x), s\rangle \bmod N) \rfloor + \frac{1}{2} \right)$$

is pseudorandom where s is also sampled uniformly in $\{0,1\}^n$.

**Third embodiment**

For this embodiment, we evaluate the original LWR-based PRF that was defined as

$$\lceil (p/2N) \cdot (\langle a, s\rangle \bmod 2N)\rfloor,$$

where the rounding function is

$$\lceil \cdot \rfloor.$$

This corresponds to evaluating the non-negacyclic function

$$f(x) = \Delta \cdot \lceil x/\Delta\rfloor$$

on the ciphertext (-**a**, 0).

To this end, we proceed by sequentially evaluating two negacyclic functions $f_C, f_{eval} : \mathbb{Z}_{[}2N] \to \mathbb{Z}_{[}q]$ as.

$$f_C(x) = \begin{cases} \frac{\Delta}{4} \cdot (2 \lfloor \frac{p}{2N} \cdot x\rfloor + 1) \bmod q & \text{if } x \in [0, N-1] \\ -\frac{\Delta}{4} \cdot (2 \lfloor \frac{p}{2N} \cdot x\rfloor - p + 1) \bmod q & \text{if } x \in [N, 2N-1] \end{cases}$$

$$f_{eval}(x) = \begin{cases} \Delta \cdot (\lfloor \frac{p}{N} \cdot x\rfloor \bmod p) & \text{if } x \in [0, \frac{N}{2} - 1] \\ \Delta \cdot (\lfloor \frac{p}{N} \cdot (2N - x)\rfloor + \frac{p}{2} \bmod p) & \text{if } x \in [\frac{3N}{2}, 2N - 1] \\ -f_{eval}(x - N) \bmod q & \text{if } x \in [\frac{N}{2}, \frac{3N}{2} - 1] \end{cases}$$

where we set $q = 2N$. Again, we view (-$\alpha$, 0) as a maximal noise TFHE encryption of the LWR-based

$$PRF \lceil (p/q) \cdot \langle a, s\rangle \bmod q\rfloor$$

to carry out the analysis. Note that a maximal noise FHE ciphertext cannot be evaluated further. The objective of this embodiment is to reduce the noise by a sequence of PBS operations so that further homomorphic evaluations may be carried out. This embodiment outputs an encryption of the standard LWR-based

$$PRF \lceil (p/q) \cdot \langle a, s\rangle \bmod q\rfloor$$

in bootstrapping depth 2. The description of this embodiment is summarised via the following algorithm:

$Eval_{\text{pp}}^{(2)}(\text{bsk}, x)$ : Given public parameters pp = (n, N, q, p), a bootstrapping key bsk and input $x \in \{0,1\}^{\ell}$, compute the input-dependent ciphertext

$$(-\boldsymbol{a}, 0) = (-H(x), 0) \in \mathbb{Z}_q^{n+1}$$ and do the following:

(a)

$$(\bar{\boldsymbol{a}}, \bar{b}) = (-\boldsymbol{a}, 0) + (\boldsymbol{0}, \tfrac{\Delta}{2})$$

(b)

$$(\boldsymbol{c}, d) = Boot[f_C](\bar{\boldsymbol{a}}, \bar{b})(\bmod q)$$

(c)

$$(\bar{\boldsymbol{c}}, \bar{d}) = Boot[f_{\text{eval}}](\boldsymbol{c}, d)(\bmod q)$$

Output the ciphertext $\text{ct} = (\bar{\boldsymbol{c}}, \bar{d}) \in \mathbb{Z}_q^{n+1}$.

It can be mathematically proven that the *Eval*[(2)] procedure indeed achieves its goal. Assume that *p* and *q* are both powers of 2 and that $\Delta = q/p > 4\beta$, where $\beta$ is the bootstrapping error. For any $x \in \{0,1\}^{\ell}$, *Eval*[(2)] outputs a ciphertext $(\bar{\boldsymbol{c}}, \bar{d}) \in \mathbb{Z}_q^{n+1}$ such that $Dec_s(\bar{c}, \bar{d}) = \Delta \cdot \mu + e(\bmod q)$, where $|e| < \beta$,

$$\mu = \lceil \tfrac{p}{q} \cdot (\langle \boldsymbol{a}, \boldsymbol{s} \rangle \bmod q) \rfloor \bmod p$$

with $\boldsymbol{a} = H(x) \in \mathbb{Z}_q^n$.

**Fourth embodiment**

In this embodiment, we use three negacyclic functions $f_0 \colon \mathbb{Z}_{2\Delta} \to \mathbb{Z}_{2\Delta}$, $f_1 \colon \mathbb{Z}_{2\Delta} \to \mathbb{Z}_q$ and $f_2 \colon \mathbb{Z}_\Delta \to \mathbb{Z}_q$ that were described in [22]. These functions are defined as

$$f_2(x) = \begin{cases} -\Delta/4 & \text{if } 0 \le x < \Delta/4 \\ +\Delta/4 & \text{if } \Delta/2 \le x < 3\Delta/4 \\ 0 & \text{otherwise} \end{cases}$$

$$f_0(x) = \left( \Delta \cdot \lfloor \tfrac{x}{\Delta} \rfloor - \tfrac{\Delta}{2} \right) \bmod 2\Delta$$

$$f_1(x) = \begin{cases} x & \text{if } x < \Delta \\ Q - x & \text{if } x \ge \Delta \end{cases}$$

Once again we are assuming that q = 2N and $\Delta = q/p \in \mathbb{Z}$. As in previous embodiments, the analysis crucially relies on viewing the ciphertext (-$a$, 0) as a maximal noise encryption of

$$\lfloor (p/q) \cdot \langle a, s \rangle \bmod q \rfloor$$

and performing a sequence of bootstraps that clean up this noise to obtain a low-noise encryption of

$$\lfloor (p/q) \cdot \langle a, s \rangle \bmod q \rfloor.$$

The description of this embodiment is summarised via the following algorithm:

$Eval_{\mathrm{pp}}^{(3)}(\mathrm{bsk}, x)$: Given public parameters pp = ($n$, $N$, $q$, $p$, $\beta$), an evaluation key bsk and an input $x \in \{0,1\}^{\ell}$, compute the input-dependent vector $a$ = $H(x) \in \mathbb{Z}_q^n$ and do the following:

(a)

$$(\overline{a}, 0) = (-a, 0) \bmod \Delta$$

(b)

$$(c, d) = (-a, 0) - Boot[f_2](\overline{a}, 0)(\bmod q)$$

(c)

$$d = d + \beta - \frac{\Delta}{4}$$

(d)

$$(\overline{c}, \overline{d}) = (c, d) \bmod \Delta$$

(e)

$$(\overline{c}, \overline{d}) = (\overline{c}, \overline{d}) \bmod 2\Delta$$

(f)

$$(\overline{c}, \overline{d}) = (\overline{c}, \overline{d}) - Boot[f_0](\overline{c}, \overline{d})(\bmod 2\Delta)$$

(g)

$$\overline{d} = \overline{d} + \beta - \frac{\Delta}{2}$$

(h)

$$(c, d) = (c, d) - Boot[f_1](\overline{c}, \overline{d}) + \beta(\bmod q)$$

Output the ciphertext $\mathrm{ct} = (c, d) \in \mathbb{Z}_{\lceil q \rceil}^{n+1}$.

Assume that $p$ divides $q$ and that $\Delta = q/p > 16\beta$, where $\beta$ is the bootstrapping error from Theorem 1. For any $x \in$ $\{0,1\}^\ell$, $Eval^{(3)}$ outputs a ciphertext $(c, d) \in \mathbb{Z}_q^{n+1}$ such that $Dec_s(c, d) = \Delta \cdot \mu + e(\bmod\ q)$, where $|e| < 2\beta$,

$$\mu = \lceil \frac{p}{q} \cdot (\langle a, s \rangle \bmod q) \rfloor \bmod p$$

with $a = H(x) \in \mathbb{Z}_q^n$.

**Example Application**

An application of our invention is efficient data transmitting. In particular, one may wish to send large amounts of data on the cloud that will eventually be used in an FHE application-think for example of image processing over encrypted data. Instead of sending FHE encryptions of the data on the cloud, our invention allows the transmission of symmetric key encryptions to dramatically reduce cloud bandwidth requirements. Specifically, the symmetric encryptions sent on the cloud do not need to be any larger than the original data, whereas FHE ciphertexts would be much larger. As an example of this application, a symmetric encryption of a message M might take the form

$$(x, M + PRF_k(x))$$

where $x$ is a random string of sufficient length chosen by the sender. Then, in order to obtain an FHE encryption of $M$, the cloud can use an FHE encryption of $k$ to compute an FHE encryption of $PRF_k(x)$. With this, the cloud can *homomorphically* subtract $PRF_k(x)$ to obtain an FHE encryption of $M$ that can be computed on further. Note that other forms of symmetric encryption (e.g., certain block cipher modes of operation) may also be used provided that PRF inputs remain public.

To give an overview of how our embodiments are applied, we may consider our third preferred embodiment as an example. This yields a symmetric encryption scheme where the sender chooses a random

$$x \hookleftarrow U(\{0,1\}^\lambda)$$

and encrypts $M \in \mathbb{Z}_p^m$ using PRF secret key

$$s \hookleftarrow U(\{0,1\}^n)$$

by computing $(x, c) = (x, M + PRF_s(x) \bmod p)$, where

$$PRF_s(x) = \lceil (p/q) \cdot (\mathbf{A}(x)^T s \bmod q) \rfloor \in \mathbb{Z}_p^m.$$

Then, the encryptor sends the ciphertext $(x, c)$. It is assumed that the evaluator possesses a copy of the corresponding public bootstrapping key bsk $= GSW.Enc_{s'}(s)$ for some secret key $s'$. From $(x, c)$ and bsk, the evaluator can compute

$$(\mathbf{A}, b = \mathbf{A}^T s' + e + \Delta \cdot PRF_s(x)) = Eval_{pp}(\text{bsk}, x) \in \mathbb{Z}_q^{m \times n} \times \mathbb{Z}_q^m\ ,$$

where $\| e \|_\infty \leq \beta$ for the bound $\beta$ of Theorem 1 Then, the evaluator obtains

$$(-\mathbf{A}, -b + \Delta \cdot c \bmod q)$$

which is an encryption of $M \in \mathbb{Z}_p^m$ under key **s'**. Observe that (**0**, $\Delta \cdot$ **c**) is a (trivial) encryption of **c**.

When **s'** = **s**, this results in an FHE encryption under the sender's key **s**. The main advantage of the proposed solution is that the encryption of $m$ plaintexts in $\mathbb{Z}_p$ only requires sending a random seed $x$ (typically, a 25 6-bit value) along with m values modulo $p$. This is much better that the plain solution that would send a matrix **A** of $m \times n$ entries modulo $q$ plus $m$ values modulo $q$ (typically, $n$ is of the order of 1000). This is even better than the folklore improved solution comprising sending a seed $\sigma$ for building matrix **A** along with m values modulo $q$. Our solution trades modulo-$q$ values against modulo-$p$ values, where $p \ll q$; typically, $p = 2^4$ and $q = 2^{64}$. Compared to the improved solution, this saves $m \cdot \log_2 q/p$ bits of transmission. For example, for $(1024 \times 1024)$ 8-bit grayscale images, with $p = 16$ and $q = 2^{64}$ (and thus $m = 2^{21}$), this results in saving more than $10^8$ bits per encrypted image.

**References**

[1] Sha-3 standard: Permutation-based hash and extendable-output functions. FIPS 202. NIST, 2015. URL: https://csrc.nist.gov/pubs/fips/202/final.

[2] Joël Alwen, Stephan Krenn, Krzysztof Pietrzak, and Daniel Wichs. Learning with rounding, revisited - new reduction, properties and applications. In Ran Canetti and Juan A. Garay, editors, CRYPTO 2013, Part I, volume 8042 of LNCS, pages 57-74. Springer, Heidelberg, August 2013. https://doi.org/10.1007/978-3-642-40041-4_4 doi:10.1007/978-3-642-40041-4_4.

[3] Abhishek Banerjee and Chris Peikert. New and improved key-homomorphic pseudorandom functions. In Juan A. Garay and Rosario Gennaro, editors, CRYPTO 2014, Part I, volume 8616 of LNCS, pages 353-370. Springer, Heidelberg, August 2014. https://doi.org/10.1007/978-3-662-44371-2_20 doi:10.1007/978-3-662-44371-2_20.

[4] Abhishek Banerjee, Chris Peikert, and Alon Rosen. Pseudorandom functions and lattices. In David Pointcheval and Thomas Johansson, editors, EUROCRYPT 2012, volume 7237 of LNCS, pages 719-737. Springer, Heidelberg, April 2012. https://doi.org/10.1007/978-3-642-29011-4_42 doi:10.1007/978-3-642-29011-4_42.

[5] Mihir Bellare, Anand Desai, Eron Jokipii, and Phillip Rogaway. A concrete security treatment of symmetric encryption. In Proceedings of the 38th Annual Symposium on Foundations of Computer Science, FOCS '97, page 394. IEEE Computer Society, 1997.

[6] Mihir Bellare, Joe Kilian, and Phillip Rogaway. The security of the cipher block chaining message authentication code. Journal of Computer and System Sciences, 61(3):362-399, 2000. https://doi.org/10.1006/jcss.1999.1694 doi:10.1006/jcss.1999.1694.

[7] Mihir Bellare and Phillip Rogaway. Random oracles are practical: A paradigm for designing efficient protocols. In Dorothy E. Denning, Raymond Pyle, Ravi Ganesan, Ravi S. Sandhu, and Victoria Ashby, editors, ACM CCS 93, pages 62-73. ACM Press, November 1993. https://doi.org/10.1145/168588.168596 doi:10.1145/168588.168596.

[8] Andrej Bogdanov, Siyao Guo, Daniel Masny, Silas Richelson, and Alon Rosen. On the hardness of learning with rounding over small modulus. In Eyal Kushilevitz and Tal Malkin, editors, TCC 2016-A, Part I, volume 9562 of LNCS, pages 209-224. Springer, Heidelberg, January 2016. https://doi.org/10.1007/978-3-662-49096-9_9 doi:10.1007/978-3-662-49096-9_9.

[9] Andrej Bogdanov and Alon Rosen. Pseudorandom functions: Three decades later. In Yehuda Lindell, editor, Tutorials on the Foundations of Cryptography, Information Security and Cryptography, chapter 3, pages 79-158. Springer, 2017. https://doi.org/10.1007/978-3-319-57048-8_3 doi:10.1007/978-3-319-57048-8_3.

[10] Dan Boneh, Kevin Lewi, Hart William Montgomery, and Ananth Raghunathan. Key homomorphic PRFs and their applications. In Ran Canetti and Juan A. Garay, editors, CRYPTO 2013, Part I, volume 8042 of LNCS, pages 410-428. Springer, Heidelberg, August 2013. https://doi.org/10.1007/978-3-642-40041-4_23 doi:10.1007/978-3-642-40041-4_23.

[11] Katharina Boudgoust, Corentin Jeudy, Adeline Roux-Langlois, and Weiqiang Wen. On the hardness of module-LWE with binary secret. In CT-RSA, 2021.

[12] Katharina Boudgoust, Corentin Jeudy, Adeline Roux-Langlois, and Weiqiang Wen. On the hardness of module learning with errors with short distributions. J. of Cryptology, 2022.

[13] Ilaria Chillotti, Nicolas Gama, Mariya Georgieva, and Malika Izabachène. Faster fully homomorphic encryption: Bootstrapping in less than 0.1 seconds. In Jung Hee Cheon and Tsuyoshi Takagi, editors, ASIACRYPT 2016, Part I, volume 10031 of LNCS, pages 3-33. Springer, Heidelberg, December 2016. https://doi.org/10.1007/978-3-662-53887-6_1 doi:10.1007/978-3-662-53887-6_1.

[14] Chitchanok Chuengsatiansup and Damien Stehle. Towards practical GGM-based PRF from (Module-)Leaming-with-Rounding. In SAC, 2019.

[15] Amit Deo, Marc Joye, and Benoit Libert. Homomorphic evaluation of LWR-based PRFs. Technical report, Zama, September 2023.

[16] Léo Ducas and Daniele Micciancio. FHEW: Bootstrapping homomorphic encryption in less than a second. In Elisabeth Oswald and Marc Fischlin, editors, EUROCRYPT 2015, Part 1, volume 9056 of LNCS, pages 617-640. Springer, Heidelberg, April 2015. https://doi.org/10.1007/978-3-662-46800-5_24 doi:10.1007/978-3-662-46800-5_24.

[17] Jan-Pieter D'Anvers, Angshuman Karmakar, Sujoy Sinha Roy, and Frederik Vercauteren. Saber: module-LWR based key exchange, CPA-secure encryption and CCA-secure KEM. In Africacrypt, 2018.

[18] J. Fan and F. Vercauteren. Somewhat practical fully homomorphic encryption. Cryptology ePrint Archive Report 2012/144.

[19] Robin Geelen and Frederik Vercauteren. Bootstrapping for BGV and BFV revisited. J. of Cryptology, 36(12), 2023.

[20] Oded Goldreich, Shafi Goldwasser, and Silvio Micali. How to construct random functions. Journal of the ACM, 33(4):792-807, August 1986. https://doi.org/10.1145/6490.6503 doi:10.1145/6490.6503.

[21] Adeline Langlois and Damien Stehlé. Worst-case to average-case reductions for module lattices. Des. Codes Cryptography, 75(3):565-599, 2015.

[22] Zeyu Liu, Daniele Micciancio, and Yuriy Polyakov. Large-precision homomorphic sign evaluation using FHEW/TFHE bootstrapping. In Shweta Agrawal and Dongdai Lin, editors, ASIACRYPT 2022, Part II, volume 13792 of LNCS, pages 130-160. Springer, Heidelberg, December 2022. https://doi.org/10.1007/978-3-031-22966-4_5 doi:10.1007/978-3-031-22966-4_5.

[23] Vadim Lyubashevsky, Chris Peikert, and Oded Regev. On ideal lattices and learning with errors over rings. In Henri Gilbert, editor, EUROCRYPT2010, volume 6110 of LNCS, pages 1-23. Springer, Heidelberg, May / June 2010. https://doi.org/10.1007/978-3-642-13190-5-1 doi:10.1007/978-3-642-13190-5_1.

[24] Shihe Ma, Tairong Huang, Anyu Wang, and Xiaoyun Wang. Fast and accurate: Efficient full-domain functional bootstrap and digit decomposition for homomorphic computation. Cryptology ePrint Archive Report 2023/645. https://eprint.iacr.org/2023/645.

[25] Oded Regev. On lattices, learning with errors, random linear codes, and cryptography. In Harold N. Gabow and Ronald Fagin, editors, 37th ACM STOC, pages 84-93. ACM Press, May 2005. https://doi.org/10.1145/1060590.1060603 doi:10.1145/1060590.1060603.

[26] Eric Rescorla. The Transport Layer Security (TLS) Protocol Version 1.3. RFC 8446, 2018. URL: https://www.rfc-editor.org/info/rfc8446, https://doi.org/10.17487/RFC8446 doi:10.17487/RFC8446.

[27] Eric Rescorla and Tim Dierks. The Transport Layer Security (TLS) Protocol Version 1.2. RFC 5246, 2008. URL: https://www.rfc-editor.org/info/rfc5246, https://doi.org/10.17487/RFC5246 doi:10.17487/RFC5246.

The references are included herein by reference.

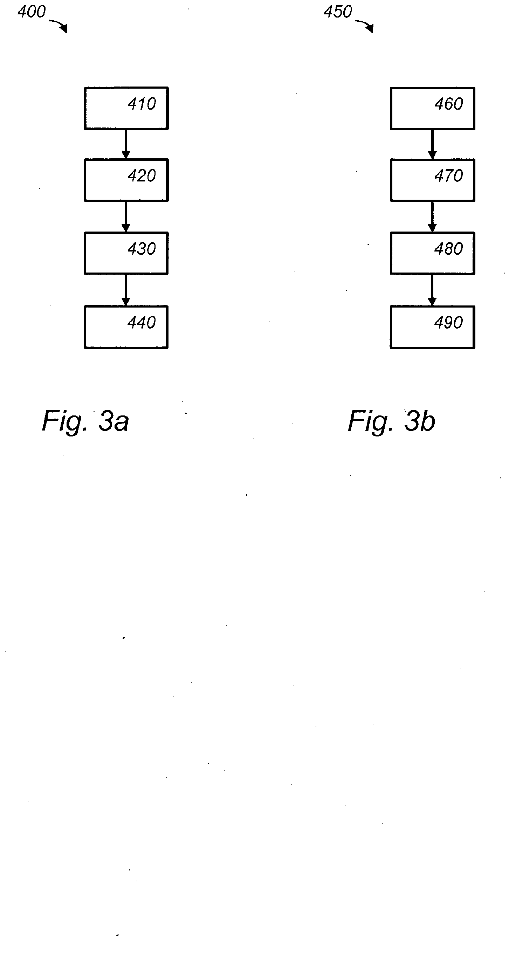

**Figure 3a** schematically shows an example of an embodiment of a method 400 for a server device for homomorphically evaluating a pseudorandom function. The server is configured for an a fully homomorphic encryption (FHE) scheme supporting a bootstrapping algorithm . Method 400 may be computer implemented and comprises, the method comprising

- receiving (410) from a client device an argument for the pseudorandom function, wherein the argument is not encrypted according to the FHE scheme, and a bootstrapping key, the bootstrapping key comprising an encryption of a secret key of the client device under a further encryption key,
- applying (420) a collision-resistant function to the argument, filling at least part of the elements of a randomized ciphertext with the output of the collision-resistant function,
- applying (430) the bootstrapping algorithm to the randomized ciphertext using the bootstrapping key, the output of the bootstrapping algorithm being encrypted under the further encryption key, and deriving (440) the pseudorandom value from the bootstrapping algorithm's output while encrypted according to the FHE scheme, the pseudorandom function being defined at least by the combination of the bootstrapping algorithm and the collision-resistant function.

**Figure 3b** schematically shows an example of an embodiment of a method 450 for a client device for evaluating a pseudorandom function. Method 450 may be computer implemented and comprises

- selecting (460) an argument for the pseudorandom function and sending the argument to the server device, wherein the argument is not encrypted according to the FHE scheme,
- obtaining (470) a secret key for the FHE scheme, and a bootstrapping key comprising an encryption of the secret key under a further encryption key, sending the bootstrapping key to the server device,
- computing (480) a pseudorandom value by applying a pseudorandom function to the selected argument, the pseudorandom function being defined at least by the combination of a bootstrapping algorithm of the FHE scheme and a collision-resistant function.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 400 and/or 450. Software may only include those steps taken by a particular subentity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

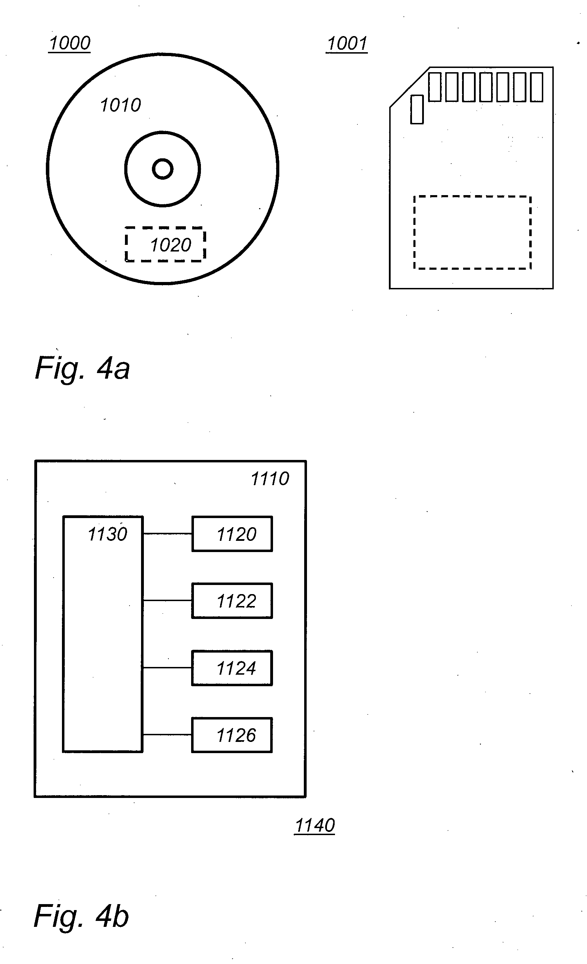

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of evaluating a pseudorandom function, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method of evaluating a pseudorandom function.

**Figure 4b** shows in a schematic representation of a processor system 1140 according to an embodiment of a device for evaluating a pseudorandom function,. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., a device configured for evaluating a pseudorandom function (either in standard computation or homomorphic computation) may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A cryptographic method (400) for a server device (120; 310) for homomorphically evaluating a pseudorandom function (PRF; 340) by a server device for an argument (231, 232) to obtain a pseudorandom value (341, 342), the server being configured for a fully homomorphic encryption (FHE) scheme supporting a bootstrapping algorithm (345), the method comprising

   - receiving (410) from a client device (110; 210) an argument (231, e.g., x) for the pseudorandom function, wherein the argument is not encrypted according to the FHE scheme, and a bootstrapping key (262, e.g., bsk), the bootstrapping key comprising an encryption of a secret key (261, e.g., s) of the client device under a further encryption key (e.g., s'),
   - applying (420) a collision-resistant function (245) to the argument, filling at least part of the elements of a randomized ciphertext (331, e.g., $(a_1, \ldots, a_k, b)$; $(a_1, \ldots, a_k, 0)$) with the output of the collision-resistant function,
   - applying (430) the bootstrapping algorithm (345) to the randomized ciphertext (331) using the bootstrapping key (262), the output of the bootstrapping algorithm being encrypted under the FHE scheme, and deriving (440) the pseudorandom value (341) from the bootstrapping algorithm's output while encrypted according to the FHE scheme, the pseudorandom function being defined at least by the combination of the bootstrapping algorithm and the collision-resistant function.

2. The method for the server device as in Claim 1, wherein

   - the output of the bootstrapping algorithm is encrypted under the further encryption key (e.g., s'), and/or
   - the server device further receives from the client device (110; 210) a key-switching key, the method comprising including a key-switching operation in the bootstrapping algorithm to obtain the output of the bootstrapping algorithm encrypted under the secret key (261, e.g., s), or optionally under another key (e.g., s").

3. The method for the server device as in Claim 1 or 2, further comprising

   - generating a stream of pseudorandom values (341, 342, e.g., $FHE(c_1)$, $FHE(c_2)$, ...) by repeated applications of the pseudorandom function, the generated stream being encrypted according to the FHE scheme,
   - receiving encrypted data (251, 252, e.g., $e_1$, $e_2$, ....), the data being in encrypted form (e.g., $e_1 = p_1 + c_1$, $e_2 = p_2 + c_2$, ...), by combining (250) the pseudorandom values in plain form (241, 242) to corresponding original data (221, 222, e.g., $p_1$, $p_2$, ...),
   - removing (350) the pseudorandom values from the encrypted data while encrypted in the FHE scheme, thus obtaining the original data (221, 222) encrypted according to the FHE scheme.

4. A cryptographic method (450) for a client device (110; 210) for evaluating a pseudorandom function (PRF; 240) configured for homomorphic evaluation by a server device (120; 310) according to an FHE scheme, the method comprising

- selecting (460) an argument (231; e.g., x) for the pseudorandom function and sending the argument to the server device (310), wherein the argument is not encrypted according to the FHE scheme,
- obtaining (470) a secret key (261; e.g., s) for the FHE scheme, and a bootstrapping key (262; e.g., bsk) comprising an encryption of the secret key under a further encryption key (e.g., s'), sending the bootstrapping key to the server device,
- computing (480) a pseudorandom value (241, 242) by applying a pseudorandom function (240) to the selected argument (231, 232), the pseudorandom function being defined at least by the combination of a bootstrapping algorithm of the FHE scheme and a collision-resistant function.

5. The method for the client device as in Claim 4, wherein

- the client device further sends to the server device (120; 220) a key-switching key, for including a key-switching operation in the bootstrapping algorithm for the server device to obtain the output of the bootstrapping algorithm encrypted under the secret key (261, e.g., $s$), or optionally under another key (e.g., $s''$).

6. The method for the client device as in Claim 4 or 5, further comprising

- generating a stream of pseudorandom values (241, 242; e.g., $c_1$, $c_2$, ...) by repeated application of the pseudorandom function (240), the generated stream being unencrypted,
- encrypting original data (221, 222; e.g., $p_1$, $p_2$, ...) by combining the pseudorandom values in plain form to the corresponding original data, (251, 252; e.g., $e_1 = p_1 + c_1$, $e_2 = p_2 + c_2$, ...),
- sending the encrypted original data to the server device.

7. A cryptographic method as in any of the preceding claims, wherein

- an encrypted data item according to the FHE scheme (e.g., $(a_1, ..., a_k, b)$) comprises a tuple numbers and/or polynomials in a ring, including a masking tuple (e.g., $a = (a_1, ..., a_k)$), and a masked message (e.g., $b = \langle a, s \rangle + e + \Delta \cdot m$, for secret key $s$ comprising a tuple of masking numbers and/or polynomials in a ring, dot product $\langle a, s \rangle$, noise $e$, message $m$, and multiplier $\Delta$), and/or
- wherein the randomized ciphertext $((-a, b); (-a, 0))$ is regarded as the FHE encryption of a value depending on the dot product $\langle a, s \rangle$, (e.g., $\lceil (\langle \boldsymbol{a}, \boldsymbol{s} \rangle \bmod q)/\Delta \rceil$ ).

8. A cryptographic method as in any of the preceding claims, wherein the pseudorandom function depends on the dot product between at least part of the randomized ciphertext (e.g., $a_1, ... , a_k$) and the secret key.

9. A cryptographic method as in Claim 8, wherein a desired pseudorandom function depending on said dot product is decomposed into a sequence of one or more programmable bootstrapping operations according to the bootstrapping algorithm, the programmable bootstrapping in the sequence being configured to provide the desired pseudorandom function in composition when performed on the randomized ciphertext.

10. A cryptographic method as in any of the preceding claims, wherein the bootstrapping algorithm is programmable for a function, wherein the function

- is negacyclic, and/or

- maps a range (e.g., $\mathbb{Z}_{2N}$; $\mathbb{Z}_q$ ) of the argument (e.g., $x$) to a ring for the elements of encrypted data items according to the FHE scheme (e.g., $\mathbb{Z}_q$ ), and/or
- the function comprises a scalar multiple of the argument or the argument modulo a modulus.

11. A cryptographic method as in any of the preceding claims, wherein the bootstrapping algorithm is configured for a function $f: R_q \to R_q$ satisfying the property that, for any input $x \in \{0,1\}^\ell$, the distribution

$$\{([a_1| ... |a_m]^T = F_a(x), \ (b_1, ..., b_m)^T = F_b(x),$$

$$(f(b_1 - \langle \boldsymbol{a_1}, \boldsymbol{s} \rangle \bmod q), \dots, f(b_m - \langle \boldsymbol{a_m}, \boldsymbol{s} \rangle \bmod q))^T)\}$$

is computationally indistinguishable from

$$\{([\boldsymbol{a_1}| \dots |\boldsymbol{a_m}]^T = F_a(x), \ (b_1, \dots, b_m)^T = F_b(x), \ \Delta \cdot U(R_p^m)\}$$

wherein $U(R_p^m)$ denotes the uniform distribution over $R_p^m$, $F_a: \{0,1\}^\ell \to R_q^{m \times k}$, is the collision-resistant function that maps an input $x \in \{0,1\}^\ell$ to an input-dependent matrix $\mathbf{A}(x) = F_a(x) \in R_q^{m \times k}$, and $F_b: \{0,1\}^\ell \to R_q^m$ that maps an input $x \in \{0,1\}^\ell$ to a ring element $R_q$.

12. A cryptographic method as in any of the preceding claims, wherein

- the bootstrapping algorithm is configured for the function $f(x) =$

$$(-1)^{msb(x)} \cdot \Delta \cdot \lceil \frac{p}{N} \cdot (x \bmod N) \rfloor,$$

and the pseudorandom function is $\mathrm{PRF}_s(x) =$

$$(-1)^{msb(\langle a,s \rangle \bmod 2N)} \lceil \frac{p}{N} \cdot (\langle \boldsymbol{a}, \boldsymbol{s} \rangle \bmod N) \rfloor \bmod p,$$

or
- the bootstrapping algorithm is configured for the function $f(x) =$ $(-1)^{msb(x)} \cdot \Delta \cdot \left( \lfloor \frac{p}{4N} \cdot (x \bmod N) \rfloor + \frac{1}{2} \right) \bmod q$, and the pseudorandom function is $PRF_s(x) = (-1)^{msb(\langle a,s \rangle \bmod 2N)} \cdot \left( \lfloor \frac{p}{4N} \cdot (\langle \boldsymbol{a}, \boldsymbol{s} \rangle \bmod N) \rfloor + \frac{1}{2} \right) + \frac{p}{4} - \frac{1}{2}$,

- the pseudorandom function is

$$PRF_s(x) := \lceil (p/2N) \cdot (\langle \boldsymbol{a}, \boldsymbol{s} \rangle \bmod 2N) \rfloor,$$

the function

$$f(x) = \Delta \cdot \lceil x / \Delta \rfloor$$

being decomposed over two bootstrapping applications.

13. A cryptographic method as in any of the preceding claims, wherein the distribution of pseudorandom values is uniform if the distribution of arguments is uniform.

14. A server device comprising: one or more processors; and one or more storage devices storing instructions that, when executed by the one or more processors, cause the one or more processors to perform operations for any method for a server device as in any of claims 1-13.

15. A client device comprising: one or more processors; and one or more storage devices storing instructions that, when executed by the one or more processors, cause the one or more processors to perform operations for any method for a client device as in any of claims 1-13.

16. A transitory or non-transitory computer storage medium encoded with instructions that, when executed by one or more computers, cause the one or more computers to perform the method according to any of claims 1-13.

100

| 110 | | 120 |
| 111 | | 121 |
| 112 | | 122 |
| 113 | | 123 |

**Fig. 1a**

101

| 110 | | 120 | | 130 |
| 111 | | 121 | | 131 |
| 112 | | 122 | | 132 |
| 113 | | 123 | | 133 |

**Fig. 1b**

102

110

172

120

130

Fig. 1c

Fig. 2a

340

262

231 → 245 → 331 → 345 → 341

*Fig. 2b*

240

261

231 → 245 → 246 → 241

*Fig. 2c*

400

410

420

430

440

*Fig. 3a*

450

460

470

480

490

*Fig. 3b*

*1000*

1010

1020

*1001*

## Fig. 4a

1110

1130

1120

1122

1124

1126

*1140*

## Fig. 4b

| | Europäisches Patentamt European Patent Office Office européen des brevets | **EUROPEAN SEARCH REPORT** | **Application Number** EP 23 31 5461 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREJ BOGDANOV ET AL: "Pseudorandom Functions: Three Decades Later", IACR, INTERNATIONAL ASSOCIATION FOR CRYPTOLOGIC RESEARCH , vol. 20170705:214144 1 July 2017 (2017-07-01), pages 1-72, XP061023779, Retrieved from the Internet: URL:http://eprint.iacr.org/2017/652.pdf [retrieved on 2017-07-01] * bottom half of page 3 * ----- | 1-16 | INV. G06F7/58 H04L9/00 |
| A | ADDA-AKRAM BENDOUKHA ET AL: "Optimized stream-cipher-based transciphering by means of functional-bootstrapping", IACR, INTERNATIONAL ASSOCIATION FOR CRYPTOLOGIC RESEARCH , vol. 20230717:075836 17 July 2023 (2023-07-17), pages 1-19, XP061079321, Retrieved from the Internet: URL:https://eprint.iacr.org/archive/2023/1 111/1689580716.pdf [retrieved on 2023-07-18] * section 1, 1.1 * ----- | 1-16 | |
| | | | TECHNICAL FIELDS SEARCHED (IPC) G06F H04L |

The present search report has been drawn up for all claims

| Place of search | Date of completion of the search | Examiner |
|---|---|---|
| Munich | 24 May 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- **MARTIN R. ALBRECHT** ; **RACHEL PLAYER** ; **SAM SCOTT**. *Lattice hardness use the approach*, vol. 9 (3), ISSN 1862-2984, 169-203
- Sha-3 standard: Permutation-based hash and extendable-output functions. *FIPS 202. NIST*, 2015, https://csrc.nist.gov/pubs/fips/202/final
- Learning with rounding, revisited - new reduction, properties and applications.. **JOËL ALWEN** ; **STEPHAN KRENN** ; **KRZYSZTOF PIETRZAK** ; **DANIEL WICHS**. CRYPTO 2013. Springer, August 2013, vol. 8042, 57-74
- New and improved key-homomorphic pseudorandom functions.. **ABHISHEK BANERJEE** ; **CHRIS PEIKERT.** CRYPTO 2014. Springer, August 2014, vol. 8616, 353-370
- Pseudorandom functions and lattices.. **ABHISHEK BANERJEE** ; **CHRIS PEIKERT** ; **ALON ROSEN.** EUROCRYPT 2012,. Springer, April 2012, vol. 7237, 719-737
- A concrete security treatment of symmetric encryption.. **MIHIR BELLARE** ; **ANAND DESAI** ; **ERON JOKIPII** ; **PHILLIP ROGAWAY**. Proceedings of the 38th Annual Symposium on Foundations of Computer Science. IEEE Computer Society, 1997, 394
- **MIHIR BELLARE** ; **JOE KILIAN** ; **PHILLIP ROGAWAY**. The security of the cipher block chaining message authentication code.. *Journal of Computer and System Sciences*, 2000, vol. 61 (3), 362-399, https://doi.org/10.1006/jcss.1999.1694
- Random oracles are practical: A paradigm for designing efficient protocols.. **MIHIR BELLARE** ; **PHILLIP ROGAWAY.** ACM CCS. ACM Press, November 1993, vol. 93, 62-73
- On the hardness of learning with rounding over small modulus.. **ANDREJ BOGDANOV** ; **SIYAO GUO** ; **DANIEL MASNY** ; **SILAS RICHELSON** ; **ALON ROSEN.** TCC 2016-A. Springer, January 2016, vol. 9562, 209-224
- Pseudorandom functions: Three decades later.. **ANDREJ BOGDANOV** ; **ALON ROSEN**. Tutorials on the Foundations of Cryptography, Information Security and Cryptography. Springer, 2017, 79-158
- Key homomorphic PRFs and their applications.. **DAN BONEH** ; **KEVIN LEWI** ; **HART WILLIAM MONTGOMERY** ; **ANANTH RAGHUNATHAN.** CRYPTO 2013. Springer, vol. 8042, 410-428

- **KATHARINA BOUDGOUST** ; **CORENTIN JEUDY** ; **ADELINE ROUX-LANGLOIS** ; **WEIQIANG WEN.** On the hardness of module-LWE with binary secret.. *CT-RSA*, 2021
- **KATHARINA BOUDGOUST** ; **CORENTIN JEUDY** ; **ADELINE ROUX-LANGLOIS** ; **WEIQIANG WEN.** On the hardness of module learning with errors with short distributions. *J. of Cryptology*, 2022
- Faster fully homomorphic encryption: Bootstrapping in less than 0.1 seconds.. **ILARIA CHILLOTTI** ; **NICOLAS GAMA** ; **MARIYA GEORGIEVA** ; **MALIKA IZABACHÈNE.** ASIACRYPT 2016. Springer, December 2016, vol. 10031, 3-33
- **CHITCHANOK CHUENGSATIANSUP** ; **DAMIEN STEHLE.** Towards practical GGM-based PRF from (Module-)Learning-with-Rounding.. *SAC*, 2019
- **AMIT DEO** ; **MARC JOYE** ; **BENOIT LIBERT.** Homomorphic evaluation of LWR-based PRFs.. *Technical report, Zama*, September 2023
- FHEW: Bootstrapping homomorphic encryption in less than a second.. **LÉO DUCAS** ; **DANIELE MICCIANCIO**. EUROCRYPT 2015. Springer, April 2015, vol. 9056, 617-640
- **JAN-PIETER D'ANVERS** ; **ANGSHUMAN KARMAKAR** ; **SUJOY SINHA ROY** ; **FREDERIK VERCAUTEREN.** Saber: module-LWR based key exchange, CPA-secure encryption and CCA-secure KEM.. *Africacrypt*, 2018
- **J. FAN** ; **F. VERCAUTEREN**. Somewhat practical fully homomorphic encryption.. *Cryptology ePrint Archive Report*, 2012, 144
- **ROBIN GEELEN** ; **FREDERIK VERCAUTEREN.** Bootstrapping for BGV and BFV revisited.. *J. of Cryptology*, 2023, vol. 36 (12)
- **ODED GOLDREICH** ; **SHAFI GOLDWASSER** ; **SILVIO MICALI.** How to construct random functions.. *Journal of the ACM*, August 1986, vol. 33 (4), 792-807, https://doi.org/10.1145/6490.6503 doi:10.1145/6490.6503.
- **ADELINE LANGLOIS** ; **DAMIEN STEHLÉ.** Worst-case to average-case reductions for module lattices.. *Des. Codes Cryptography*, 2015, vol. 75 (3), 565-599
- Large-precision homomorphic sign evaluation using FHEW/TFHE bootstrapping.. **ZEYU LIU** ; **DANIELE MICCIANCIO** ; **YURIY POLYAKOV.** ASIACRYPT 2022. Springer, December 2022, vol. 13792

- On ideal lattices and learning with errors over rings.. **VADIM LYUBASHEVSKY** ; **CHRIS PEIKERT** ; **ODED REGEV.** EUROCRYPT2010. Springer, May 2010, vol. 6110, 1-23
- **SHIHE MA** ; **TAIRONG HUANG** ; **ANYU WANG** ; **XIAOYUN WANG.** Fast and accurate: Efficient full-domain functional bootstrap and digit decomposition for homomorphic computation.. *Cryptology ePrint Archive Report*, 2023, 645, https://eprint.iacr. org/2023/645.
- On lattices, learning with errors, random linear codes, and cryptography.. **ODED REGEV.** 37th ACM STOC. ACM Press, May 2005, 84-93
- **ERIC RESCORLA.** *The Transport Layer Security (TLS) Protocol Version 1.3. RFC 8446*, 2018, https://www.rfc-editor.org/info/rfc8446
- **ERIC RESCORLA** ; **TIM DIERKS.** *The Transport Layer Security (TLS) Protocol Version 1.2. RFC 5246*, 2008, https://www.rfc-editor.org/info/rfc5246